# EUROPEAN PATENT SPECIFICATION

(11) **EP 4 028 608 B1**
(45) Date of publication and mention of the grant of the patent: **15.01.2025**
(21) Application number: 20863575.5
(22) Date of filing: 14.09.2020
(51) Int. Cl.: E04D 3/35, C09J 7/38, C09J 7/50, C09D 171/00, C09D 175/04, E04D 5/14

(54) **FULLY-ADHERED ROOFING SYSTEMS UTILIZING A PRIMER HAVING A SILICON-TERMINATED POLYMER**
VOLLFLÄCHIG VERKLEBTE DACHSYSTEME, DIE EINE GRUNDIERUNG MIT EINEM POLYMER MIT SILIKON-ENDGRUPPE VERWENDEN
SYSTÈMES DE TOITURE ENTIÈREMENT COLLÉS UTILISANT UN APPRÊT AYANT UN POLYMÈRE À TERMINAISON SILICIUM

(30) Priority: 13.09.2019 US 201962899814 P; 13.09.2019 US 201962899825 P
(43) Date of publication of application: 20.07.2022
(73) Proprietor: Holcim Technology Ltd, 6300 Zug (CH)
(72) Inventor: JAIN, Dharamdeep, 5113 Holderbank (CH); TANG, Jiansheng, 5113 Holderbank (CH); HUBBARD, Michael J., 5113 Holderbank (CH); QIN, Zengquan, 5113 Holderbank (CH)
(74) Representative: Kraus & Lederer PartGmbB
(86) International application number: PCT/US2020/050708
(87) International publication number: WO 2021/051074

(56) References cited:
- EP-A2- 0 714 963
- WO-A1-2017/165868
- JP-A- S6 217 251
- US-A1- 2006 243 388
- US-A1- 2007 088 137
- US-A1- 2007 088 137
- US-A1- 2015 337 534
- US-A1- 2018 066 434

## Description

This application claims the benefit of U.S. Provisional Application Serial No. 62/899,814 filed on September 13, 2019, and U.S. Provisional Application Serial No. 62/899,825 filed on September 13, 2019.

### FIELD OF THE INVENTION

Embodiments of the invention are directed toward fully-adhered roofing systems that include lap seams formed by using a primer that includes a silicon-terminated polymer.

### BACKGROUND OF THE INVENTION

Large, flexible polymeric sheets, which are often referred to as membranes or panels, are used in the construction industry to cover flat or low-sloped roofs. These membranes provide protection to the roof from the environment, particularly in the form of a waterproof barrier. As is known in the art, commercially popular membranes include thermoset membranes such as those including cured EPDM (i.e., ethylene-propylene-diene terpolymer rubber) or thermoplastics such as TPO (i.e., thermoplastic olefins).

These membranes are typically delivered to a construction site in a bundled roll, transferred to the roof, and then unrolled and positioned. The sheets are then affixed to the building structure by employing varying techniques such as mechanical fastening, ballasting, and/or adhesively adhering the membrane to the roof. The roof substrate to which the membrane is secured may be one of a variety of materials depending on the installation site and structural concerns. For example, the surface may be a concrete, metal, or a wood deck, it may include insulation or recover board, and/or it may include an existing membrane.

In addition to securing the membrane to the roof, the individual membrane panels, together with flashing and other accessories, are positioned and adjoined together so as to achieve a waterproof barrier on the roof. Typically, the edges of adjoining panels are overlapped, and these overlapping portions are adjoined (i.e. seamed) to one another through a number of methods depending upon the membrane materials and exterior conditions. One approach involves providing adhesives or adhesive tapes between the overlapping portions, thereby creating a water resistant seal.

WO 2017/165868A1 describes a method for forming a fully-adhered roofing system by using peel-and-stick techniques whereby a cured pressure-sensitive adhesive that is disposed on a roofing membrane is capable of securing the membrane to roof surface and is also capable of mating the membrane to an adjacent membrane to thereby form a lap seam. The surface of the adjacent membrane to which the pressure-sensitive adhesive is applied in forming the lap seam can be primed.

Field priming of the membrane panels in the lap area is performed by roofing mechanics, and therefore there is a risk of improper application. For example, roof mechanics may not apply enough primer or apply it unevenly. Also, the primer compositions that are used include solvents that must flash prior to forming the seam. If seaming takes place too quickly, an inadequate seam can be formed. Also, the evaporation of the solvents produces VOCs, which can be regulated or prohibited.

It is also known to pre-prime membranes so that the membranes do not have to be field primed. For example, U.S. Publ. No. 2007/0264471 teaches a factory applied non-tacky primer composition to a roof membrane for bonding to an adhesive without the need for field-applied primer. Since the primer is non-tacky, the membrane can be rolled onto itself without adhering to an uncoated surface. U.S. Publ. No. 2010/0024955 similarly teaches a pre-primed membrane where the primer layer carries a release liner. U.S. Publ. No. 2010/0200148 teaches roofing membranes with a layer of cured polymer coating layer in the lap area. The cured polymer coating layer is non-tacky and therefore does not require a release liner. The disclosed coatings include UV-cured acrylic compositions and moisture-cured one-part urethane compositions.

### SUMMARY OF THE INVENTION

One or more embodiments of the present invention provide a method of installing a roof system, the method comprising: providing a first membrane composite including a polymeric planar body having a first planar surface and a second planar surface, a UV-cured pressure-sensitive adhesive layer disposed on the second planar surface, a release member removably secured to the UV-cured pressure-sensitive adhesive layer opposite the polymeric planar body, and a primer layer disposed along a lap area on the first planar surface, where the primer layer includes a cured residue of a silyl-terminated polymer; adhesively securing the first membrane composite to a roof surface through the UV-cured pressure-sensitive adhesive layer; providing a second membrane composite including a polymeric planar body having a first planar surface and a second planar surface, a UV-cured pressure-sensitive adhesive layer disposed on the second planar surface, a release member removably secured to the UV-cured pressure-sensitive adhesive layer opposite the planar body, and optionally a primer layer disposed along a lap area on the first planar surface; adhesively securing the second membrane composite to the roof surface through the UV-cured pressure-sensitive adhesive layer, where the second membrane composite is positioned adjacent to and partially overlapping the lap area of the first membrane composite; and adhesively securing the second membrane composite to the first planar surface of the first membrane composite along the primer layer through the UV-cured pressure-sensitive adhesive layer disposed on the second membrane composite.

Yet other embodiments of the present invention provide a membrane composite comprising: a polymeric membrane panel having a first planar surface and a second planar surface; a pressure-sensitive adhesive layer disposed on said second planar surface; a release member removably secured to said pressure-sensitive adhesive layer; and a primer layer applied along a lap area on said second planar surface, where the primer layer includes a cured residue of a silyl-terminated polymer.

Still yet other embodiments of the present invention provide a method of installing a roof system, the method comprising providing a first membrane composite including a polymeric planar body having a first planar surface and a second planar surface, a UV-cured pressure-sensitive adhesive layer disposed on the second planar surface, and a release member removably secured to the pressure-sensitive adhesive layer opposite the polymeric planar body; removing the release member; adhesively securing the first membrane composite to a roof surface through the UV-cured pressure-sensitive adhesive layer; providing a second membrane composite including a polymeric planar body having a first planar surface and a second planar surface, a UV-cured pressure-sensitive adhesive layer disposed on the second planar surface, and a release member removably secured to the pressure-sensitive adhesive layer opposite the planar body; partially removing the release member from the second membrane composite; adhesively securing the second membrane composite to the roof surface through the UV-cured pressure-sensitive adhesive layer where the release member has been partially removed, where the second membrane composite is positioned adjacent to and partially overlapping a lap area on the first planar surface of the first membrane composite; applying a primer composition to the lap area on the first planar surface of the first membrane, where the primer composition includes a silyl terminated polymer; allowing the primer composition to at least partially cure and thereby form an at least partially cured primer layer; fully removing the release member from the second membrane composite; and adhesively securing the second membrane composite to the first planar surface of the first membrane composite by mating the pressure-sensitive adhesive of the second membrane to the at least partially cured primer layer disposed on the first membrane composite.

### BRIEF DESCRIPTION OF THE DRAWINGS

Fig. 1 is a cross-section perspective view of a membrane composite according to embodiments of the present invention.
Fig. 2 is a cross-section perspective view of a membrane composite according to embodiments of the present invention.
Fig. 3 is a cross-sectional perspective view of a roof system including membrane composites according to embodiments of the present invention.

### DETAILED DESCRIPTION OF ILLUSTRATIVE EMBODIMENTS

Embodiments of the invention are based, at least in part, on the discovery of fully-adhered roofing membrane systems utilizing a lap-edge primer that includes a silicon-terminated polymer or a cured residue thereof. The lap-edge primer layer has unexpectedly been found to exhibit desirable properties including the ability to form advantageous seams with peel-and-stick membranes carrying adhesives based upon cured acrylic compositions. In other words, the pressure-sensitive adhesive serves to adhere the membrane panel to the roof substrate and to seam or splice the membrane to adjacent membranes at the location of a complementary primer layer. As detailed below, the primer may advantageously be field applied, or in other embodiments, the primer may be pre-applied in a fabrication facility with the membrane being shipped to the field carrying the primer layer. Where the membrane is pre-primed, the composite membrane carries both a primer layer and an adhesive layer, which allows for attachment to the roof surface and seaming to adjacent membranes without the need to apply adhesives or primer in the field, whereby the VOCs released to the environment during installation are substantially reduced or eliminated.

### MEMBRANE COMPOSITE

One or more embodiments of the invention employ a membrane composite that includes a cured pressure-sensitive adhesive disposed on a planar surface of the membrane panel. In certain embodiments, where the primer is pre-applied, the composite also includes a layer of primer disposed on a surface of the membrane panel opposite the pressure-sensitive adhesive.

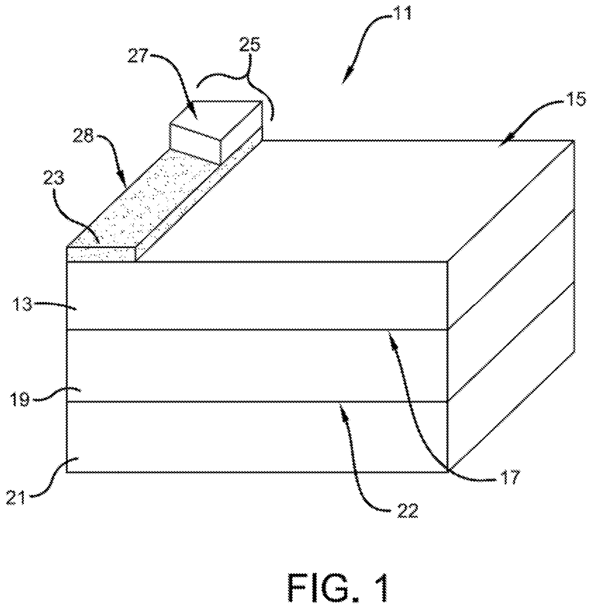

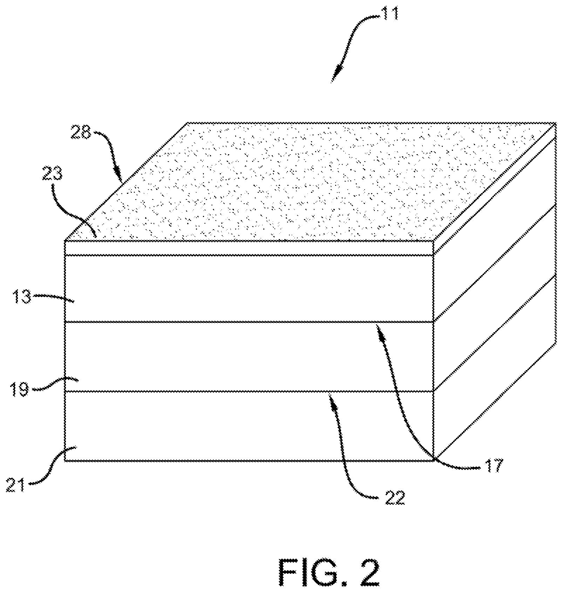

The membrane composites can be described with reference to Figs 1 and 2. Fig. 1 shows a membrane composite panel 11, including polymeric membrane panel 13 having a first planar surface 15 and a second planar surface 17. A pressure-sensitive adhesive layer 19 is disposed on and adhesively mated to planar surface 17. In one or more embodiments, pressure-sensitive adhesive layer 19 is disposed on all or substantially all of surface 17. An optional release member 21 may be removably attached to layer 19 on surface 22 of layer 19, which surface is opposite to where adhesive layer 19 contacts planar surface 17 of panel 13. In one or more embodiments, pressure-sensitive adhesive layer 19 is disposed over greater than 80%, in other embodiments greater 90%, and in other embodiments greater than 99% of the surface area of surface 17 of panel 13.

Where the composite is pre-primed (i.e. a primer layer is applied prior to delivery to the location of installation), a primer layer 23 is disposed on and adhesively mated to planar surface 15 of panel 13, which is opposite surface 17, which carries the adhesive layer. In one or more embodiments, primer layer 23 is disposed on only a portion of surface 15. For example, and as specifically shown in Fig. 1, primer layer 23 is disposed on a lap portion 25, which may also be referred to a lap area 25, on first planar surface 15. An optional release member 27 may be removably attached to primer layer 23 on surface 28 of primer layer 23, which surface is opposite to where primer layer 23 contacts planar surface 15 of panel 13. In one or more embodiments, primer layer 23 is tack free and therefore a release member is advantageously not required.

In other embodiments, as shown in Fig. 2, primer layer 23 is disposed on all or substantially all of surface 15. As with the previously described embodiments, an optional release member 27 may be removably attached to layer 23 on surface 28 of primer layer 23, which surface is opposite to where primer layer 23 contacts planar surface 15 of panel 13. In one or more embodiments, primer layer 23 is tack free and therefore a release member is advantageously not required. In one or more embodiments, primer layer 23 is disposed over greater than 80%, in other embodiments greater 90%, and in other embodiments greater than 99% of the surface area of surface 15 of panel 13.

As also indicated above, primer layer 23 may be disposed only in lap area 25 of surface 15 of panel 13. In one or more embodiments, lap area 25, and therefore primer layer 23, includes or occupies less than 20%, in other embodiments less than 10%, and in other embodiments less than 5% of the surface area of surface 15 of panel 13. In these or other embodiments, lap area 25 extends along the lateral edge of panel 13 (i.e., extends along a longitudinal length of panel 13) and extends inwardly from the edge (i.e., perpendicular to the edge) greater than 1 cm, in other embodiments greater than 2 cm, and in other embodiments greater than 3 cm. In these or other embodiments, the lap area 25 extends along the lateral edge of panel 13 and extends inwardly from the edge less than 30 cm, in other embodiments less than 20 cm, and in other embodiments less than 15 cm. In one or more embodiments, the lap area 25 extends along the lateral edge of panel 13 and extends inwardly from the edge a distance of from about 1 to about 30, in other embodiments from about 2 to about 20, and in other embodiments from about 3 to about 15 cm. As those skilled in the art will appreciate, the primer layer may have similar characteristics even though it is applied in the field.

In one or more embodiments, the pressure-sensitive adhesive layer (e.g. layer 19) may have a thickness of greater than 51 µm (2 mil), in other embodiments greater than 102 µm (4 mil), in other embodiments greater than 127 µm (5 mil), and in other embodiments greater than 152 µm (6 mil). In these or other embodiments, the pressure-sensitive adhesive layer has a thickness of less than 381 µm (15 mil), in other embodiments less than 305 µm (12 mil), and in other embodiments less than 254 µm (10 mil). In one or more embodiments, the adhesive layer has a thickness of from about 51 to about 381 µm (about 2 to about 15 mil), in other embodiments from about 102 to about 305 µm (about 4 to about 12 mil), and in other embodiments from about 127 to about 254 µm (about 5 to about 10 mil).

In one or more embodiments, the primer layer (e.g. layer 23) may have a thickness of greater than 6 µm (0.25 mil), in other embodiments greater than 12 µm (0.5 mil), in other embodiments greater than 25 µm (1 mil), in other embodiments greater than 38 µm (1.5 mil), in other embodiments greater than 51 µm (2 mil), and in other embodiments greater than 64 µm (2.5 mil). In these or other embodiments, the primer layer has a thickness of less than 178 µm (7 mil), in other embodiments less than 127 µm (5 mil), and in other embodiments less than 76 µm (3 mil). In one or more embodiments, the adhesive layer has a thickness of from about 6 to about 178 µm (about 0.25 to about 7 mil), in other embodiments from about 25 to about 127 µm (about 1 to about 5 mil), and in other embodiments from about 51 to about 76 µm (about 2 to about 3 mil).

### MEMBRANE PANEL

In one or more embodiments, the membrane panel (e.g. panel 13) may be a thermoset material. In other embodiments the membrane may be a thermoformable material. In one or more embodiments, the membrane may be EPDM based. In other embodiments, the membrane may be TPO based. In these or other embodiments, the membrane may be flexible and capable of being rolled up for shipment. In these or other embodiments, the membrane may include fiber reinforcement, such as a scrim. In one or more embodiments, the membrane includes EPDM membranes including those that meet the specifications of the ASTM D-4637. In other embodiments, the membrane includes thermoplastic membranes including those that meet the specifications of ASTM D-6878-03. Still other membranes may include PVC, TPV, CSPE, and asphalt-based membranes.

Where the primer layer is applied to the membrane in the field, at least one planar surface of the membrane panel (e.g. a planar surface of an EPDM membrane panel) may be coated with or includes surface particulate. In particular embodiments, the surface particulate is disposed on the surface opposite the surface to which the pressure sensitive adhesive is applied. In one or more embodiments, the membrane panel is an EPDM membrane panel and the surface opposite the adhesive layer includes mica or talc. In one or more embodiments, a substantial amount of surface particulate refers is present, which refers to an amount of particulate on the surface of the membrane that that would have an appreciable impact on adhesion of the membrane to the pressure-sensitive adhesive of an adjoining membrane. In one or more embodiments, the membrane panels include greater than 10 g/m2, in other embodiments greater than 20 g/m2, and in other embodiments greater than 30 g/m2 of surface particulate.

In one or more embodiments, conventional dimensions characterize the roofing membrane panels. For example, in one or more embodiments, the membrane panels may have a thickness of from about 500 µm to about 3 mm, in other embodiments from about 1,000 µm to about 2.5 mm, and in other embodiments from about 1,500 µm to about 2 mm. In these or other embodiments, the membrane panels of the present invention are characterized by a width of about 1 m to about 20 m, in other embodiments from about 2 m to about 18 m, and in other embodiments from about 3 m to about 15 m.

### PRESSURE-SENSITIVE ADHESIVE LAYER

In one or more embodiments, the pressure-sensitive adhesive (e.g., layer 19) derives from a curable hot-melt adhesive composition. In other words, and as will be described in greater detail below, an uncured adhesive composition is applied to a surface of the membrane as a hot-melt composition (i.e., the composition is heated and applied as a flowable composition in the absence or appreciable absence of solvent), and then the composition is subsequently crosslinked (i.e., cured) to form the cured pressure-sensitive layer.

In one or more embodiment, the curable hot-melt adhesive composition may be an acrylic-based hot-melt adhesive. In one or more embodiments, the adhesive includes a polyacrylate such as a polyacrylate elastomer. In one or more embodiments, useful polyacrylates include one or more units defined by the formula: 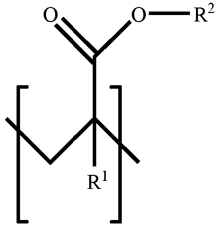 where each R¹ is individually hydrogen or a hydrocarbyl group and each R² is individually a hydrocarbyl group. In the case of a homopolymer, each R¹ and R², respectively, throughout the polymer are same in each unit. In the case of a copolymer, at least two different R¹ and/or two different R² are present in the polymer chain.

In one or more embodiments, hydrocarbyl groups include, for example, alkyl, cycloalkyl, substituted cycloalkyl, alkenyl, cycloalkenyl, substituted cycloalkenyl, aryl, substituted aryl, aralkyl, alkaryl, allyl, and alkynyl groups, with each group containing in the range of from 1 carbon atom, or the appropriate minimum number of carbon atoms to form the group, up to about 20 carbon atoms. These hydrocarbyl groups may contain heteroatoms including, but not limited to, nitrogen, oxygen, boron, silicon, sulfur, and phosphorus atoms. In particular embodiments, each R² is an alkyl group having at least 4 carbon atoms. In particular embodiments, R¹ is hydrogen and R² is selected from the group consisting of butyl, 2-ethylhexyl, and mixtures thereof.

In one or more embodiments, the polyacrylate elastomers that are useful as adhesives in the practice of this invention may be characterized by a number average molecular weight of from about 100 to about 350 kg/mole, in other embodiments from about 150 to about 270 kg/mole, and in other embodiments from about 180 to about 250 kg/mole.

In one or more embodiments, the polyacrylate elastomers that are useful as adhesives in the practice of this invention may be characterized by a glass transition temperature (Tg) of less than 0 °C, in other embodiments less than -20 °C, in other embodiments less than -30 °C. In these or other embodiments, useful polyacrylates may be characterized by a Tg of from about -70 to about 0 °C, in other embodiments from about -50 to about -10°C, and in other embodiments from about -40 to about -20 °C.

In one or more embodiments, the polyacrylate elastomers that are useful as adhesives in the practice of this invention may be characterized by a Brookfield viscosity at 150 °C of from about 20,000 to about 70,000 cps, in other embodiments from about 30,000 to about 60,000 cps, and in other embodiments from about 40,000 to about 50,000 cps.

Specific examples of polyacrylate elastomers that are useful as adhesives in the practice of the present invention include poly(butylacrylate), and poly(2-ethylhexylacryalte). These polyacrylate elastomers may be formulated with photoinitiators, solvents, plasticizers, and resins such as natural and hydrocarbon resins. The skilled person can readily formulate a desirable coating composition. Useful coating compositions are disclosed, for example, in U.S. Patent Nos 6,720,399; 6,753,079; 6,831,114; 6,881,442; and 6,887,917;.

In other embodiments, the polyacrylate elastomers may include polymerized units that serve as photoinitiators. These units may derive from copolymerizable photoinitiators including acetophenone or benzophenone derivatives. These polyacrylate elastomers and the coating compositions formed therefrom are known as disclosed in U.S. Patent Nos 7,304,119 and 7,358,319.

Useful adhesive compositions are commercially available in the art. For example, useful adhesives include those available under the tradename acResin (BASF), those available under the tradename AroCure (Ashland Chemical), and NovaMeltRC (NovaMelt). In one or more embodiments, these hot-melt adhesives may be cured (i.e., crosslinked) by UV light.

In one or more embodiments, the hot-melt adhesive is at least partially cured after being applied to the membrane, as will be discussed in greater detail below. In one or more embodiments, the adhesive is cured to an extent that it is not thermally processable in the form it was prior to cure. In these or other embodiments, a cross-linked infinite polymer network characterizes the cured adhesive. While at least partially cured, the adhesive layer of one or more embodiments is essentially free of curative residue such as sulfur or sulfur crosslinks and/or phenolic compounds or phenolic-residue crosslinks.

### CHARACTERISTICS OF PRESSURE-SENSITIVE ADHESIVE LAYER

In one or more embodiments, the degree of cure throughout the pressure-sensitive adhesive layer has a substantially consistent degree of cure. In one or more embodiments, the degree of cure throughout the entire adhesive layer varies by no more than 10%, in other embodiments by no more than 5%, and in other embodiments by no more than 1%. In one or more embodiments, the degree of cure is substantially consistent, which refers to an unappreciable variation in the cure state. In one or more embodiments, the cure state of the entire adhesive layer can be quantified based upon gel content. As a skilled person appreciates, gel content can be determined based upon the level of insoluble material following solvent extraction, which for purposes of this specification refers to solvent extraction using THF at its boiling point following four hours of extraction. These extraction techniques can be performed, for example, using Soxhlet extraction devices. In one or more embodiments, the gel content of the cured adhesive layer, based upon a THF extraction at the boiling point of THF after four hours, is at least 50%, in other embodiments at least 55%, and in other embodiments at least 60% by weight. In these or other embodiments, the gel content is less than 90%, in other embodiments less than 85%, and in other embodiments less than 80%. In one or more embodiments, the gel content is from about 50% to about 90%, in other embodiments from about 55% to about 85%, and in other embodiments from about 60% to about 80% by weight.

In one or more embodiments, the pressure-sensitive layer (i.e., the crosslinked pressure-sensitive adhesive) disposed on a surface of the membrane may be characterized by advantageous strength, which can be quantified based upon the peel strength of adhered system formed using the pressure-sensitive layer. In one or more embodiments, the adhesive layer may give rise to a peel strength when adhered to facer material, according to Pressure Sensitive Tape Council (PSTC) 101, of at least 3.0, in other embodiments at least 3.5, and in other embodiments at least 4.0 units. In these or other embodiments, the peel strength may be from about 3.0 to about 25 in other embodiments from about 3.5 to about 20, and in other embodiments from about 4.0 to about 18 psi.

As indicated above, the pressure-sensitive adhesive, in its cured or partially cured state, provides sufficient tack to allow the membrane composites of this invention to be used in roofing systems that meet industry standards for wind uplift resistance. In one or more embodiments, this tack may be quantified based upon the peel strength when adhered to another membrane in accordance with ASTM D-1876-08. In one or more embodiments, the cured pressure-sensitive adhesive of the present invention is characterized by a peel strength, according to ASTM D-1876-08, of at least 1.8 lbf/in, in other embodiments at least 3.6 lbf/in, in other embodiments at least 8.0 lbf/in, in other embodiments at least 15 lbf/in, and in other embodiments at least 20 lbf/in.

Similarly, the tack of the pressure-sensitive adhesive, in its cured state, may be quantified based upon the peel strength when adhered to a construction board (e.g. insulation board) having a kraft paper facer in accordance with ASTM D-903-98 (2010). In one or more embodiments, the cured pressure-sensitive adhesive of the present invention is characterized by a peel strength, according to ASTM D-903-98 (2010) using an insulation board with a kraft paper facer, of at least 1.5 lbf/in, in other embodiments at least 2.0 lbf/in, in other embodiments at least 2.5 lbf/in, in other embodiments at least 3.0 lbf/in, and in other embodiments at least 3.5 lbf/in.

In one or more embodiments, the pressure-sensitive adhesive layer may be characterized by an advantageous dead load shear. In one or more embodiments, the dead load shear of the layer of crosslinked pressure-sensitive adhesive disposed on the membranes of the present invention may be characterized by a dead load shear, as determined according to PSTC 107, of at least 0.5 hour (time of failure), in other embodiments at least 1.0 hour, and in other embodiments at least 1.5. In these or other embodiments, the dead load shear may be from about 2.0 to about 2.5 hours.

### PRIMER LAYER

In one or more embodiments, the primer (e.g. layer 23) derives from a primer composition. In other words, and as will be described in greater detail below, a primer composition is applied to a surface of the membrane (e.g. in the lap area) and is subsequently cured. According to aspects of this invention, components of the primer composition react in the presence of atmospheric moisture to form a cured coating layer (i.e. cured or crosslinked primer layer). Accordingly, aspects of the invention may be described with reference to the uncured primer composition, which refers to the composition including those constituents of the composition before appreciable chemical reaction or crosslinking takes place, and to the cured primer layer, which refers to the primer after chemical reaction or crosslinking.

In one or more embodiments, the cured primer layer is the cured residue of a primer composition including a silicon-terminated polymer. Stated another way, the cured primer layer is formed from a primer composition that includes polymer with a silicon-containing hydrolysable terminal group that is curable through a moisture curing reaction.

In one or more embodiments, the uncured primer composition includes greater than 95 wt %, in other embodiments greater than 98 wt %, and in other embodiments greater than 99 wt % solids. In particular embodiments, the uncured primer composition is 100% solids composition (i.e. it is solvent free).

### CHARACTERISTICS OF UNCURED PRIMER COMPOSITION

According to aspects of the present invention, the primer compositions employed in the practice of this invention are tailored to a desired dynamic and static viscosity. This can be achieved by manipulating several parameters such as, but not limited to, the molecular weight of the polymers, the amount of filler, and the use of thixotropic agents.

In one or more embodiments, the primer compositions are characterized by a Brookfield Viscosity, which can be determined by ASTM D789 or D4878 using a #2 spindle at 20 r.p.m. at 23.5 °C and 50% relative humidity. In one or more embodiments, the Brookfield Viscosity (#2 spindle at 20 r.p.m.) of the curable sealant compositions is greater than 300, in other embodiments greater than 400, in other embodiments greater than 500, in other embodiments greater than 600, and in other embodiments greater than 700 centipoise. In these or other embodiments, the of the Brookfield Viscosity (#2 spindle at 20 r.p.m.) of the curable sealant compositions is less than 2500, in other embodiments less than 1500, and in other embodiments less than 1000, in other embodiments less than 900, and in other embodiments less than 800, in other embodiments less than 700, and in other embodiments less than 600 centipoise. In one or more embodiments, the Brookfield Viscosity (#2 spindle at 20 r.p.m.) of the curable sealant compositions is from about 300 to about 2500, in other embodiments from about 400 to about 1500, and in other embodiments from about 400 to about 1000 centipoise, in other embodiments from about 600 to about 900 centipoise, and in other embodiments from about 700 to about 750 centipoise.

In one or more embodiments, the uncured primer compositions are characterized by a tack free time, which can be determined by ASTM C 679 at 20 °C and 50% relative humidity. In one or more embodiments, the tack free time (ASTM C679) of the uncured primer compositions is greater than 1, in other embodiments greater than 2, and in other embodiments greater than 3 minutes. In these or other embodiments, the tack free time of the uncured primer compositions is less than 1 hour, in other embodiments less than 40 minutes, in other embodiments less than 20, in other embodiments less than 15, and in other embodiments less than 10 minutes. In one or more embodiments, the tack free time of the uncured primer compositions is from about 1 to about 20, in other embodiments from about 2 to about 15, and in other embodiments from about 3 to about 10 minutes.

In one or more embodiments, the primer compositions, are characterized by minimal shrinking during the curing process. As the skilled person will appreciate, shrinkage can be quantified by the percent volume change in the composition from the time of application to the time of removal of substantially all of the solvent. In one or more embodiments, the percent shrinkage of the primer compositions employed in this invention is less than 10 volume %, in other embodiments less than 5 volume %, and in other embodiments less than 3 volume %, and in other embodiments less than 1 volume %.

In one or more embodiments, the primer compositions are characterized by a reduced substrate swell, particularly to EPDM membrane at 20 °C and 50% relative humidity. In one or more embodiments, the primer compositions cause an EDPM membrane to swell, after 24 hours of contact time, less than 2%, in other embodiments less than 1%, and in other embodiments less than 0.5%.

In one or more embodiments, the primer compositions are characterized by a relatively low VOC release during the curing process. In one or more embodiments, the primer compositions release, up until complete cure, less than 25, in other embodiments less than 20, and in other embodiments less than 15 grams of VOC/liter of curable sealant composition.

### PRIMER INGREDIENTS

In one or more embodiments, the uncured primer compositions include a polymer having silicon-containing hydrolyzable terminal group. In addition, the uncured primer compositions may include a plasticizer, a moisture scavenger, an adhesion promoter, and a catalyst. Other optional ingredients may include an antioxidant, a stabilizer, a tackifier, a filler, a crosslink inhibitor (a.k.a retarder), a plasticizer, a thixotropic compound, and/or an anti-degradant.

### SILANE-TERMINATED POLYMERS

In one or more embodiments, the polymer having a silicon-containing hydrolyzable terminal group may be referred to as a silane-terminated polymer or a silyl-terminated polymer. The term "silicon-containing hydrolyzable terminal group" refers to a group wherein at least one silicon atom is associated with a hydrolyzable group, such as a hydrocarbyloxy group (e.g. methoxy or ethoxy group), and is subject to hydrolysis and polymerization through interaction with water (i.e. moisture). In one or more embodiments, the polymer is telechelic, which refers to the fact that the polymer is linear and include a silicon-containing hydrolyzable terminal group at each end of the polymer chain. In one or more embodiments, the silyl terminal end includes at least two, and in other embodiments at least three hydrolyzable groups (e.g. the hydrolyzable group is a trimethoxy or triethoxy silyl group).

In one or more embodiments, the backbone of the silyl-terminated polymer includes one or more silicon-containing repeat units (e.g. a polysiloxy backbone). In other embodiments, the backbone of the silyl-terminated polymer is devoid of silicon-containing internal repeat units (e.g. a non-siloxy backbone). In one or more embodiments, the backbone of the silyl-terminated polymer includes a polyether, polyesters, polyurethanes (SPUR), or the like.

Suitable polymers having silicon-containing hydrolyzable terminal groups are commercially available and/or can be prepared in accordance with techniques known in the art. Examples of suitable commercially available polymers having silicon-containing hydrolyzable terminal groups are Geniosil^{™} STP-E 35, which is believed to be a trimethoxysilylpropyl-carbamate-terminated polyether, and Geniosil^{™} STP-E 30, which is believed to be a silane-terminated polyether with dimethoxy(methyl)silyl methylcarbamate terminal groups, both of which are available from Wacker Chemical. Another commercially available polymer having silicon-containing hydrolyzable terminal groups include "SPUR+" silane-terminated polyurethanes, which are available from Momentive. Another suitable commercially available polymer is "MS" silyl-terminated polyether (S227H, S303, S327, S303H, SAX350), which are available from Kaneka.

### MOLECULAR WEIGHT OF SILYL-TERMINATED POLYMERS

In one or more embodiments, the silyl-terminated polymers have a number average molecular weight greater than 500 g/mole, in other embodiments greater than 1,000 g/mole, in other embodiments greater than 2,500 g/mole, and in other embodiment greater than 5,000 g/mole. In these or other embodiments, the silyl-terminated polymers have a number average molecular weight of less than 30,000 g/mole, in other embodiments less than 20,000 g/mole, in other embodiments less than 15,000 g/mole, in other embodiments less than 10,000 g/mole, in other embodiments less than 7,000 g/mole, in other embodiments less than 5,000 g/mole, in other embodiments less than 4,000 g/mole, and in other embodiments less than 3,000 g/mole. In one or more embodiments, the silyl-terminated polymers have a number average molecular weight of from about 500 to 30,000, in other embodiments from about 1,000 to about 15,000, and in other embodiments from about 1,500 to about 7,000 g/mole. In these or other embodiments, the silyl-terminated polymers are characterized by a polydispersity of from about 1.0 to about 5.0, in other embodiments from about 1.2 to about 3.5, and in other embodiments from about 1.3 to about 2.5.

In one or more embodiments, the silyl-terminated polymers are characterized by a Brookfield Viscosity, which can be determined by ASTM D789 or D4878 using a #2 spindle at 20 r.p.m. at 20 °C and 50% relative humidity. In one or more embodiments, the Brookfield Viscosity (#2 spindle at 20 r.p.m.) of the silyl terminated polymers is greater than 1000, in other embodiments greater than 1500, and in other embodiments greater than 2000 centipoise. In these or other embodiments, the of the Brookfield Viscosity (#2 spindle at 20 r.p.m.) of the curable sealant compositions is less than 10,000, in other embodiments less than 7,500, in other embodiments less than 6,000, in other embodiments less than 5,000, in other embodiments less than 4,000, in other embodiments less than 3,000, in other embodiments less than 2,500, and in other embodiments less than 1000 centipoise. In one or more embodiments, the Brookfield Viscosity (#2 spindle at 20 r.p.m.) of the curable sealant compositions is from about 1000 to about 10,000, in other embodiments from about 1500 to about 5000, and in other embodiments from about 1700 to about 3000 centipoise.

### PLASTICIZERS

In one or more embodiments, examples of a plasticizer include phthalic acid esters (such as dioctyl phthalate, diisooctyl phthalate, dibutyl phthalate, diundecyl phthalate, diisononyl phthalate, diisodecyl phthalate, diisodocecyl phthalate and butylbenzyl phthalate); aliphatic dibasic acid esters (such as dioctyl adipate, isodecyl succinate, and dibutyl sebacate); glycol esters (such as diethylene glycol dibenzoate and pentaerythritol ester); aliphatic esters (such as butyl oleate and methyl acetylricinoleate); phosphoric acid esters (such as tricresyl phosphate, trioctyl phosphate, and octyldiphenyl phosphate); epoxy plasticizers (such as epoxidated soybean oil, epoxidated linseed oil, and benzyl epoxystearate); polyester plasticizers (such as polyesters of dibasic acid and a divalent alcohol); polyethers (such as polypropylene glycol and its derivatives); polystyrenes (such as poly-α-methylstyrene and polystyrene); polybutadiene butadiene-acrylonitrile copolymer; polychloroprene; polyisoprene; polybutene; chlorinated paraffins; benzoic esters; glycol esters; phosphoric esters; sulfonic esters; and mixtures thereof, wherein any given compound is different than an ingredient otherwise included in the composition of the invention.

In addition, high-molecular weight plasticizers can also be used. Specific examples of such high-molecular weight plasticizer include, but are not limited to, vinyl polymers obtainable by polymerizing a vinyl monomer by various methods; polyalkylene glycol esters such as diethyl ene glycol dibenzoate, triethylene glycol dibenzoate and pentaerythritol esters; polyester plasticizers obtainable from a dibasic acid, such as sebacic acid, adipic acid, azelaic acid or phthalic acid, and a dihydric alcohol, such as ethylene glycol, diethylene glycol, triethylene glycol, propylene glycol or dipropylene glycol; polyethers such as polyether polyols, e.g. polyethylene glycol, polypropylene glycol and polytetramethylene glycol that have a molecular weight of 500 or more, and even further 1,000 or more, and derivatives of these as obtainable by converting the hydroxyl groups of these polyether polyols to an ester, ether or the like groups; polystyrenes such as polystyrene and poly-α-methylstyrene; polybutadiene, polybutene, polyisobutylene, butadiene-acrylonitrile, polychloroprene and the like. In one or more specific embodiments, plasticizers include propylene glycol dibenzoate, diisononyl phthalate, and soy methyl esters, Mesamol II, HB-40, butylbenzylphthalate. In other specific embodiments, the plasticizers employed are phthalic acid esters. In one or more embodiments, the plasticizers may include high boiling solvents that promote tackification, lowering of viscosity, and sprayability.

In one or more embodiments, the plasticizer is a non-phthalic plasticizer. In one or more embodiments, the plasticizer is a glycol ether ester. In one or more embodiments, glycol ether esters may be prepared from glycol ethers, for example by reaction with carboxylic acids, carboxylic acid chlorides, anhydrides and inorganic acids. In one or more embodiments, the plasticizer may be prepared by reacting a glycol ether and a carboxylic acid. In one or more embodiments, the glycol ether may be represented by the formula R'OH, and the carboxylic acid may be represented by the formula R"COOH, where R' is a monovalent organic group that includes at least one ether linkage, and R" is a monovalent organic group.

Examples of carboxylic acids include formic acid, acetic acid, propionic acid, butyric acid, benzoic acid, pentanoic acid, hexanoic acid, heptanoic acid, octanoic acid, nonanoic acid, decanoic acid, diacids including butanedioic acid, pentaedioic acid, hexanedioic acid, heptanedioic acid, octanedioic acid, nonanedioic acid, and decanedioic acid, and combinations and isomers thereof.

Glycol ethers include alkyl ethers of ethylene glycol or propylene glycol. In one or more embodiments, glycol ethers may be prepared by reacting an alcohol (e.g., methanol, ethanol, propanol, butanol, or hexanol) with ethylene oxide or propylene oxide. Glycol ethers are sometimes classified as e-series and p-series glycol ethers, where the "e" and "p" indicate that the glycol ether was derived from ethylene oxide or propylene oxide, respectively.

Examples of glycol ethers include 2-methoxyethanol (also known as ethylene glycol monomethyl ether, with a chemical formula of CH₃OCH₂CH₂OH), 2-ethoxyethanol (also known as ethylene glycol monoethyl ether, with a chemical formula of CH₃CH₂OCH₂CH₂OH), 2-propoxyethanol (also known as ethylene glycol monopropyl ether, with a chemical formula of CH₃CH₂CH₂OCH₂CH₂OH), 2-isopropoxyethanol (also known as ethylene glycol monoisopropyl ether, with a chemical formula of (CH₃)₂CHOCH₂CH₂OH), 2-butoxyethanol (also known as ethylene glycol monobutyl ether, with a chemical formula of CH₃CH₂CH₂CH₂OCH₂CH₂OH), 2-phenoxyethanol (also known as ethylene glycol monophenyl ether, with a chemical formula of C₆H₅OCH₂CH₂OH), 2-benzyloxyethanol (also known as ethylene glycol monobenzyl ether, with a chemical formula of C₆H₅CH₂OCH₂CH₂OH), 1-methoxy-2-propanol (also known as propylene glycol methyl ether, with a chemical formula of CH₃OCH₂CH(OH)CH₃), 2-(2-methoxyethoxy)ethanol (also known as diethylene glycol monomethyl ether or methyl carbitol, with a chemical formula of CH₃OCH₂CH₂OCH₂CH₂OH), 2-(2-ethoxyethoxy)ethanol (also known as diethylene glycol monoethyl ether or carbitol cellosolve, with a chemical formula of CH₃CH₂OCH₂CH₂OCH₂CH₂OH), 2-(2-butoxyethoxy)ethanol (also known as diethylene glycol mono-n-butyl ether or butyl carbitol, with a chemical formula of CH₃CH₂CH₂CH₂OCH₂CH₂OCH₂CH₂OH), dipropyleneglycol methyl ether, and combinations, complexes, and isomers thereof. In one or more embodiments, the glycol ether is bis[2-(2-butoxyethoxy) ethoxy] methane.

Examples of non-phthalic plasticizers also include methyl cellosolve acetate, ethyl cellosolve acetate, methyl carbitol acetate, ethyl carbitol acetate, ethylene glycol ethyl ether acetate, propylene glycol methyl ether acetate, 3-methyl-3-methoxybutylacetate, diethylene glycol diacetate, dipropylene glycol dibutyrate, hexylene glycol diacetate, glycol diacetate, methyl glycol acetate, ethyl glycol acetate, butyl glycol acetate, ethyl diglycol acetate, butyl diglycol acetate, diethylene glycol dibenzoate, triethylene glycol dibenzoate, and ethyl-3-ethoxypropionate.

In one or more embodiments, the non-phthalic plasticizer may include a glycol ether. Useful glycol ethers include those describe above with reference to the glycol esters. In this regard, the discussion above with respect to glycol ethers is incorporated herein.

In one or more embodiments, the non-phthalic plasticizer may be characterized by a weight average molecular weight of greater than 100, in other embodiments, greater than 110, in other embodiments, greater than 120. In one or more embodiments, non-phthalic plasticizer may be characterized by a weight average molecular weight of less than 1000, in other embodiments, less than 900, in other embodiments, less than 800. In one or more embodiments, non-phthalic plasticizer may be characterized by a weight average molecular weight of from about 100 to about 1000, in other embodiments, from about 110 to about 900, in other embodiments, from about 120 to about 800.

In one or more embodiments, the non-phthalic plasticizer is a liquid at room temperature and at standard pressure, and may be characterized by a boiling point of greater than 100 °F, in other embodiments, greater than 150 °F, in other embodiments, greater than 200 °F. In one or more embodiments, non-phthalic plasticizer may be characterized by a boiling point of less than 600 °F, in other embodiments, less than 550 °F, in other embodiments, less than 500 °F. In one or more embodiments, non-phthalic plasticizer may be characterized by a boiling point of from about 100 to about 600 °F, in other embodiments, from about 150 to about 550, in other embodiments, from about 200 to about 500, all of the above measured at atmospheric pressure.

Non-phthalic plasticizers are commercially available, for example from Hallstar Industrial under the trade name Plasthall 190. Advantageously, phthalate plasticizers, which include phthalic acid esters such as dioctyl phthalate, diisooctyl phthalate, dibutyl phthalate, diundecyl phthalate, diisononyl phthalate, diisodecyl phthalate, diisodocecyl phthalate and butylbenzyl phthalate, may be reduced or eliminated from the adhesive composition.

### MOISTURE SCAVENGER

In one or more embodiments, a moisture scavenger is employed in the adhesive compositions of this invention. Moisture scavengers that may be employed include chemical moisture scavengers and physical moisture scavengers that absorb and/or adsorb moisture. Examples of chemical moisture scavengers include vinyl-trimethoxysilane. An example of a physical moisture scavenger that may be employed is 3A Sieves from UOP, which is a zeolite having 3 Angstrom pores capable of trapping moisture. Other examples of moisture scavengers include oxazoladines and calcium oxide.

As suggested above, a low VOC-generating moisture scavenger may be employed within the adhesive compositions of the present invention. In one or more embodiments, these moisture scavengers are silanes including at least one organo functional group and at least one hydrolyzable group that, upon hydrolysis, generates a non-volatile organic compound or low vapor volatile organic compound (e.g., a glycol or other polyhydric alcohol of relatively high boiling point and/or low vapor pressure). Useful moisture scavenger compounds are described in U.S. Patent No. 8,088,940.

In one or more embodiments, the moisture scavengers can be defined by the formula

(X¹ₐX²_{b}X³_{c}SiR¹)_{d}Z

where each occurrence of R¹ is independently a chemical bond between a silicon atom and a carbon atom of the Z group; a hydrocarbyl group of 1 to 10 carbon atoms; or a heterocarbyl of 1 to 10 carbon atoms and at least one heteroatom of nitrogen or oxygen; each occurrence of X¹ is a monovalent alkyl or aryl group of from 1 to 6 carbon atoms or a monovalent heterocarbyl group of from 2 to 8 carbon atoms and at least two heteroatom selected from the group consisting of oxygen and nitrogen, with the proviso that one heteroatom is bonded to a carbon atom of the heterocarbyl group and to the silicon atom; each occurrence of X² is a divalent heterocarbyl group of from 2 to 8 carbon atoms and at least two heteroatoms selected from the group consisting of oxygen and nitrogen, with the proviso that two heteroatoms are bonded to two different carbon atoms of the heterocarbyl group and to the same silicon atom; each occurrence of X³ is a trivalent heterocarbyl group of from about 3 to 8 carbons and at least three heteroatoms selected from the group consisting of oxygen and nitrogen, with the proviso that three heteroatoms are bonded to three different carbon atoms of the heterocarbyl group and to the same silicon atom; each Z is a monovalent or polyvalent organofunctional group of valence d selected from the group consisting of hydrogen, amino, carbamato, epoxy, ureido and alkenyl groups, provided, where Z does not possess a carbon atom, R¹ cannot be a chemical bond; and, each occurrence of a, b, c and d are integers, wherein a is 0 to 3; b is 0 or 1; c is 0 or 1; and d is 1 to 4; with the proviso that when c is 0, then a+2b=3 and when b is 1, then a=1 and c=0.

In one or more embodiments, the moisture scavenger is a glycoxysilane moisture scavenger. In particular embodiments, the glycoxysilane moisture scavenger may be defined by the formula: 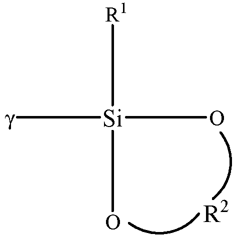 where R¹ is a monovalent organic group, R² is a divalent organic group, and γ is an electron donating group. In particular embodiments, R¹ is a hydrocarbyl group. In other embodiments, R¹ is a hydrocarbyloxy group. In one or more embodiments, γ is a vinyl group.

In one or more embodiments, the monovalent organic groups of the glycoxysilane may be hydrocarbyl groups, which include, but not limited to, alkyl, cycloalkyl, alkenyl, cycloalkenyl, aryl, allyl, aralkyl, alkaryl, or alkynyl groups. Hydrocarbyl groups also include substituted hydrocarbyl groups, which refer to hydrocarbyl groups in which one or more hydrogen atoms have been replaced by a substituent such as a hydrocarbyl group. In one or more embodiments, these groups may include from one, or the appropriate minimum number of carbon atoms to form the group, to about 20 carbon atoms. These groups may or may not contain heteroatoms. Suitable heteroatoms include, but not limited to, nitrogen, boron, oxygen, silicon, sulfur, tin, and phosphorus atoms. In one or more embodiments, the cycloalkyl, cycloalkenyl, and aryl groups are non-heterocyclic groups. In these or other embodiments, the substituents forming substituted hydrocarbyl groups are non-heterocyclic groups.

In one or more embodiments, the moisture scavenger may be 3A Sieves from UOP, which is a zeolite having 3 Angstrom pores capable of trapping.

In one or more embodiments, the monovalent organic groups of the glycoxysilane may be hydrocarbyloxy groups which include, but are not limited to, alkoxy, cycloalkoxy, substituted cycloalkoxy, alkenyloxy, cycloalkenyloxy, substituted cycloalkenyloxy, aryloxy, allyloxy, substituted aryloxy, aralkyloxy, alkaryloxy, or alkynyloxy groups. Substituted hydrocarbyloxy groups include hydrocarbyloxy groups in which one or more hydrogen atoms attached to a carbon atom have been replaced by a substituent such as an alkyl group. In one or more embodiments, the hydrocarbyloxy groups may include from one, or the appropriate minimum number of carbon atoms to form the group, to 20 carbon atoms. The hydrocarbyloxy groups may contain heteroatoms such as, but not limited to nitrogen, boron, oxygen, silicon, sulfur, and phosphorus atoms.

In one or more embodiments, the divalent organic groups of the glycoxysilane may include hydrocarbylene groups such as, but not limited to, alkylene, cycloalkylene, alkenylene, cycloalkenylene, alkynylene, cycloalkynylene, or arylene groups. Hydrocarbylene groups include substituted hydrocarbylene groups, which refer to hydrocarbylene groups in which one or more hydrogen atoms have been replaced by a substituent such as a hydrocarbyl group. In one or more embodiments, these groups may include from one, or the appropriate minimum number of carbon atoms to form the group, to about 20 carbon atoms. These groups may or may not contain heteroatoms. Suitable heteroatoms include, but not limited to, nitrogen, boron, oxygen, silicon, sulfur, tin, and phosphorus atoms. In one or more embodiments, the cycloalkylene, cycloalkenylene, and arylene groups are non-heterocyclic groups. In these or other embodiments, the substituents forming substituted hydrocarbylene groups are non-heterocyclic groups.

Specific examples of glycoxysilane compounds include vinyl, methyl, 2-methyl-1,3-propanedioxy silane, which may also be referred to as 2,5-dimethyl-2-vinyl[1,2,3]dioxasilinane. These moisture scavengers are available under the tradename Y-15866 (Momentive).

### ADHESION PROMOTER

In one or more embodiments, the adhesion promoter includes a non-polymeric silicon-containing hydrocarbon compound that has a lower molecular weight than the polymer having a silicon-containing hydrolysable group (i.e. the silane-terminate polymer). Also, the adhesion promoter includes at least one hydrolyzable group capable of reacting with a hydrolyzed functional group on the polymer having silicon-containing hydrolyzable terminal groups, and includes at least one moiety capable of interacting (i.e., promoting adhesion) with materials that are to be bonded with one another (such as a rubber membrane material). The expression non-polymeric, as used to modify the silicon-containing hydrocarbon compound is meant to exclude polymers and copolymers having at least 10 repeat units or monomeric units, such as urethane prepolymers having silicon-containing hydrolyzable terminal groups, but is meant to encompass oligomeric silicon-containing hydrolyzable compounds having fewer than 10 repeat units or monomers, and which are useful for promoting adhesion between a substrate and a cured adhesive composition.

Suitable adhesion promoters include those having an alkoxysilyl, a ketoximesilyl, or an alkenoxysilyl group as the hydrolyzable group, and exemplary such compositions include vinyltris(2-methoxyethoxy)silane, 3-methacryloxypropyltrimethoxysilane, 2-(3,4-epoxycyclohexyl)ethyl trimethoxysilane, 3-glycidoxypropyltrimethoxysilane, 3-glycidoxypropylmethyldiethoxysilane, N-(2-aminoethyl) 3-aminopropyltrimethoxysilane, 3-aminopropyltriethoxysilane, 3-(N-aminomethylbenzylamino)propyltrimethoxysilane, 3-mercaptopropyltrimethoxysilane, 3-aminopropyltris(methylethylketoxime)silane, 3-glycidoxy propyltriisopropenoxysilane, and 3-glycidoxypropylmethyldiisopropenoxysilane. In certain embodiments, the adhesion promoter is 3-aminopropyltriethoxysilane (*i.e.* 3-(trimethoxysilyl)propylamine).

In one or more embodiments of the invention, the bond adhesive composition may include an adhesion promoter that produces a reduced amount of volatile organic compound compared to that produced by conventional silane adhesion promoters. Adhesion promoters that produce a reduced amount of volatile organic compound compared to that produced by conventional silane adhesion promoters may be referred to as low VOC-generating adhesion promoters. Low VOC-generating adhesion promoters are described, for example, in U.S. Patent Application Pub. Nos. 2006/0205907 A1 and 2008/0237537 A1.

Examples of low VOC-generating adhesion promoters include silanes of the general formula:

[Y[-G(-SiXᵤZ^{b}ᵥZ^{c}_{w})ₛ]ᵣ]ₙ (Formula 1)

wherein each occurrence of G is independently a polyvalent group derived from the substitution of one or more hydrogen atoms of an alkyl, alkenyl, aryl or aralkyl group, or a group obtained by removal of one or more hydrogen atoms of a heterocarbon, with G containing from about 1 to about 30 carbon atoms; each occurrence of X is independently - Cl, -Br, R¹O-, R¹C(=O)O-, hydroxycarboxylicacids, R¹R² C=NO-, R⁴R²NO-or R¹R²N-, -R¹, -(OSiR¹R²)ₜ(OSiR¹R²R³), and -O(R¹⁰CR¹¹)_{f}OH, wherein each occurrence of R¹, R², R³, R¹⁰, and R¹¹ is independently R; each occurrence of Z^{b} is independently selected from the group consisting of (-O-)_{0.5}, [-O(R¹⁰CR¹¹)_{f}O-]_{0.5}, [-NR⁴-L⁴-NR⁵-]_{0.5}, [-OC(=O)R¹⁰CR¹¹C(=O)O-]_{0.5} except succinic, maleic or phthalic acid, an alkanolamine or an acetylenic glycol where these groups form bridging bonds between silicon atom centers, wherein each occurrence of R¹⁰ and R¹¹ is independently R and each occurrence of L¹ is independently G; each occurrence of Z^{C} is independently selected from the group consisting of -O(R¹⁰CR¹¹)_{f}O-, -NR⁴- L¹-NR⁵-, -OC(=O) R¹⁰CR¹¹C(=O)O-except succinic, maleic or phthalic acid, an alkanolamine or an acetylenic glycol where these groups form cyclic bonds with a silicon atom center, wherein each occurrence of R¹⁰ and R¹¹ is independently R and each occurrence of L¹ is independently G; each occurrence of R is hydrogen, straight alkyl, cyclic alkyl, branched alkyl, alkenyl, aryl, aralkyl, an ether, polyether, or a group obtained by removal of one or more hydrogen atoms of a heterocarbon; each occurrence of R contains from 1 to about 20 carbon atoms; each occurrence of the subscript f is an integer of from 1 to about 15; each occurrence of n is an integer of from 1 to about 100, with the proviso that when n is greater than 1; v is greater than 0 and all of the valences for Z^{b} have a silicon atom bonded to them; each occurrence of the subscript u is an integer of from 0 to about 3; each occurrence of the subscript v is an integer of from 0 to about 3; each occurrence of the subscript w is an integer of from 0 to about 1, with the proviso that u+v+2w=3; each occurrence of the subscript r is an integer of from 1 to about 6; each occurrence of the subscript t is an integer of from 0 to about 50; each occurrence of the subscript s is an integer of from 1 to about 6; each occurrence of Y is an organofunctional group of valence r; and at least one cyclic and bridging organofunctional silane comprising the cyclic and bridging organofunctional silane composition containing at least one occurrence of Z^{b} or Z^{c}.

In one or more embodiments, the low VOC-generating adhesion promoter may be prepared by reaction of an aminoalkylalkoxysilane with an alkane diol. For example, in one or more embodiments, a silane useful as a low VOC-generating adhesion promoter may be prepared by the transesterification of 3-aminopropyltriethoxysilane with 2-methyl-1,3-propanediol.

### CATALYSTS

In one or more embodiments, suitable catalysts may include catalysts for the purpose of promoting the crosslinking the silane-terminated polymer. Without wishing to be bound by any particular theory, it is believed that these catalysts promote the hydrolysis and condensation of organosilicon compounds (i.e., reactions between the terminal groups of the polymer having silicon-containing hydrolyzable terminal groups, and reactions between the optional adhesion promoter when present and the polymer having silicon-containing hydrolyzable terminal groups). In one or more embodiments, hydrolysis of organosilicon compounds may be catalyzed by either acids or bases. Useful basic catalysts that may be employed in the compositions of this invention include alkali metal hydroxides such as potassium hydroxide, silanolates such as lithium silanolate, organic amines, and Lewis bases such as alkali metal carbonates and bicarbonates. Suitable acid catalysts include mineral acids such as sulfuric and phosphoric acids, organic acids such as acetic, propanoic and methane sulfonic acids. Other suitable acid catalysts include Lewis acids such as aluminum chloride, organotin compounds such as dibutyl tin dilaurate and titanium compounds such as the alkyl ortho esters, including tetrabutyl titanate.

### THIXOTROPE

In one or more embodiments, suitable thixotropic agents may include, but are not limited to, polyvinylpyrrolidone, titanate coupling agents, metal soaps (such as calcium stearate, aluminum stearate, and barium stearate, aluminum distearate, and aluminum tristearate), copolymers with acidic groups, compounds having ionic groups, fumed silica, colloidal silica, asbestine, organic derivatives of castor oil (such as hydrogenated castor oil derivatives), treated clays, organic bentonite, modified polyester polyols (such as polyoxyethylene-polyoxypropylene block copolymers), aliphatic amides, and polyamides (such as polyamide waxes). Specific examples include polyamide waxes, such as "Crayvallac SLX" available from Arkema, or polymerized castor oils such as Flowtone R from Crayvalley.

### FILLER

In one or more embodiments, the primer compositions include a filler. In particular embodiments, the filler is a mineral filler. Useful mineral fillers include, but are not limited to, clays, silicates, titanium dioxide, talc (magnesium silicate), mica (mixtures of sodium and potassium aluminum silicate), alumina trihydrate, antimony trioxide, calcium carbonate, titanium dioxide, silica, magnesium hydroxide, calcium borate ore, fumed silica, and mixtures thereof.

### ANTIDEGRADANTS

In one or more embodiments, useful anti-degradants include UV-stabilizers, antioxidants, and/or antiozonants. Examples of useful antioxidants include hindered phenols and phosphate esters.

### TACKIFYING RESIN

In one or more embodiments, suitable tackifying resins include aliphatic, cycloaliphatic, aromatic, aliphatic-aromatic, aromatic modified alicyclic, and alicyclic hydrocarbon resins and modified versions and hydrogenated derivatives thereof; terpenes (polyterpenes), modified terpenes (e.g., phenolic modified terpene resins), phenolic resins, and mixture thereof. Other useful tackifying agents are disclosed in, e.g., U.S. Pat. No. 6,355,317.

### PRIMER - INGREDIENT AMOUNTS

### SILANE-TERMINATED POLYMER

In one or more embodiments, the primer compositions include greater than 45 wt %, in other embodiments greater than 50%, and in other embodiments greater than 55 wt % silane-terminated polymer, based upon the entire weight of the primer composition. In these or other embodiments, the primer compositions include less than 80%, in other embodiments less than 75%, and in other embodiments less than 70% wt % silane-terminated polymer, based upon the entire weight of the primer composition. In one or more embodiments, the primer compositions include from about 45% to about 80%, in other embodiments from about 50% to about 75%, and in other embodiments from about 55% to about 70% wt % silane-terminate polymer, based upon the entire weight of the primer composition.

### FILLERS

In one or more embodiments, the primer compositions include greater than 0.1 weight parts, in other embodiments greater than 0.5 weight parts, and in other embodiments greater than 1 weight parts filler per 100 parts by weight of the silane-terminated polymer component. In these or other embodiments, the primer compositions include less than 10 weight parts, in other embodiments less than 5 weight parts, in other embodiments less than 3 weight parts, in other embodiments less than 1 weight parts, and in other embodiments less than 0.5 weight parts filler per 100 parts by weight of the silane-terminated polymer component. In one or more embodiments, the primer compositions include from about 0.1 to about 10, in other embodiments from about 0.5 to about 3, and in other embodiments from about 1 to about 2 weight parts filler per 100 parts by weight of the silane-terminated polymer component. In one or more embodiments, the primer composition is devoid or substantially devoid of filler.

### ADHESION PROMOTERS

In one or more embodiments, the primer compositions include greater than 0.1, in other embodiments greater than 0.5, and in other embodiments greater than 1.0 weight parts adhesion promoter per 100 parts by weight of the silane-terminated polymer component. In these or other embodiments, the primer compositions include less than 10, in other embodiments less than 8, and in other embodiments less than 6 weight parts adhesion promoter per 100 parts by weight of the silane-terminated polymer. In one or more embodiments, the primer compositions include from about 0.1 to about 10, in other embodiments from about 0.5 to about 8, and in other embodiments from about 1.0 to about 6 weight parts adhesion promoter per 100 parts by weight of the silane-terminated adhesion promoter. In one or more embodiments, the primer composition is devoid or substantially devoid of adhesion promoter.

### CATALYST

In one or more embodiments, the primer compositions include greater than 0.01, in other embodiments greater than 0.05, and in other embodiments greater than 0.1 weight parts catalyst per 100 parts by weight of the silane-terminated polymer component. In these or other embodiments, the primer compositions include less than 1.0, in other embodiments less than 0.5, and in other embodiments less than 0.3 weight parts catalyst per 100 parts by weight of the silane-terminated polymer. In one or more embodiments, the primer compositions include from about 0.01 to about 1.0, in other embodiments from about 0.05 to about 0.5, and in other embodiments from about 0.1 to about 0.3 weight parts catalyst per 100 parts by weight of the silane-terminated adhesion promoter.

### THIXATROPE

In one or more embodiments, the primer compositions include greater than 0.1, in other embodiments greater than 1.0, and in other embodiments greater than 2.0 weight parts thixatrope per 100 parts by weight of the silane-terminated polymer component. In these or other embodiments, the primer compositions include less than 10, in other embodiments less than 3.0, and in other embodiments less than 1.0 weight parts thixatrope per 100 parts by weight of the silane-terminated polymer. In one or more embodiments, the primer compositions include from about 0.1 to about 10, in other embodiments from about 0.5 to about 5, and in other embodiments from about 1.0 to about 2.0 weight parts thixatrope per 100 parts by weight of the silane-terminated adhesion promoter. In one or more embodiments, the primer composition is devoid or substantially devoid of thixatrope.

### ANTIDEGRADANTS

In one or more embodiments, the primer compositions include greater than 0.1, in other embodiments greater than 1.0, and in other embodiments greater than 2.0 weight parts antidegradant per 100 parts by weight of the silane-terminated polymer component. In these or other embodiments, the primer compositions include less than 10, in other embodiments less than 5.0, and in other embodiments less than 3.0 weight parts antidegradant per 100 parts by weight of the silane-terminated polymer. In one or more embodiments, the primer compositions include from about 0.1 to about 10, in other embodiments from about 0.5 to about 5, and in other embodiments from about 1.0 to about 3.0 weight parts antidegradant per 100 parts by weight of the silane-terminated adhesion promoter. In one or more embodiments, the primer composition is devoid or substantially devoid of antidegradant.

### HYDROCARBON RESIN

In one or more embodiments, the primer compositions include greater than 0.1, in other embodiments greater than 1.0, and in other embodiments greater than 2.0 weight parts hydrocarbon resin per 100 parts by weight of the silane-terminated polymer component. In these or other embodiments, the primer compositions include less than 10, in other embodiments less than 5.0, and in other embodiments less than 3.0 weight parts hydrocarbon resin per 100 parts by weight of the silane-terminated polymer. In one or more embodiments, the primer compositions include from about 0.1 to about 10, in other embodiments from about 0.5 to about 5, and in other embodiments from about 1.0 to about 3.0 weight parts hydrocarbon resin per 100 parts by weight of the silane-terminated adhesion promoter. In one or more embodiments, the primer composition is devoid or substantially devoid of hydrocarbon resin.

### PLASTICIZER

In one or more embodiments, the primer compositions include greater than 15, in other embodiments greater than 25, and in other embodiments greater than 35 weight parts plasticizer per 100 parts by weight of the silane-terminated polymer component. In these or other embodiments, the primer compositions include less than 70, in other embodiments less than 55, and in other embodiments less than 45 weight parts plasticizer per 100 parts by weight of the silane-terminated polymer. In one or more embodiments, the primer compositions include from about 15 to about 70, in other embodiments from about 25 to about 55, and in other embodiments from about 35 to about 45 weight parts plasticizer per 100 parts by weight of the silane-terminated adhesion promoter. In one or more embodiments, the primer composition is devoid or substantially devoid of plasticizer.

### SOLVENT

In one or more embodiments, the primer compositions include greater than 0.01, in other embodiments greater than 0.05, and in other embodiments greater than 1.0 weight parts solvent per 100 parts by weight of the silane-terminated polymer component. In these or other embodiments, the primer compositions include less than 1.0, in other embodiments less than 0.5, and in other embodiments less than 0.1 weight parts solvent per 100 parts by weight of the silane-terminated polymer. In one or more embodiments, the primer compositions include from about 0 to about 10, in other embodiments from about 0.01 to about 5, and in other embodiments from about 0.1 to about 3.0 weight parts solvent per 100 parts by weight of the silane-terminated adhesion promoter. In one or more embodiments, the primer composition is devoid or substantially devoid of solvent where substantially devoid refers to that amount or less that would otherwise have an appreciable impact on the invention.

### CHARACTERISTICS OF CURED PRIMER LAYER

In one or more embodiments, the cured primer layer lacks adhesive qualities as compared to the pressure-sensitive adhesive layer (e.g. layer 19). For example, a lap seam formed with just two primed surfaces and no tape or other adhesive may be characterized by a peel strength of less than 1.0 pli (1.75 N/cm).

In one or more embodiments, the cured primer layer provides an advantageous surface to which an adhesive can be applied and form a bond with the adhesive that will not serve as the point of failure in a peel test; instead, the adhesive will cohesively fail or the bond between the adhesive and adjoining substrate will fail before the bond between the substrate and the primer layer. For example, the when subjected to standard peels tests, such as those prescribed by ASTM D 413, that employs EPDM substrates and a standard roofing splice tape (e.g. butyl-EPDM blend tape), the bond between the tape and the primer layer will, after 7 days aging at 20 °C and 50% relative humidity, withstand peel forces of greater than 4 pounds per lineal inch (pli), in other embodiments greater than 5 pli, in other embodiments greater than 6 pli, in other embodiments greater than 7 pli, and in other embodiments greater than 7 pli.

### RELEASE MEMBER

In one or more embodiments, release member 21 and optional release member 27 may include a polymeric film or extrudate, or in other embodiments it may include a cellulosic substrate. Where the polymeric film and/or cellulosic substrate cannot be readily removed after being attached to the asphaltic component, the polymeric film and/or cellulosic substrate can carry a coating or layer that allows the polymeric film and/or cellulosic substrate to be readily removed from the asphaltic component after attachment. This polymeric film or extrudate may include a single polymeric layer or may include two or more polymeric layers laminated or coextruded to one another.

Suitable materials for forming a release member that is a polymeric film or extrudate include polypropylene, polyester, high-density polyethylene, medium-density polyethylene, low-density polyethylene, polystyrene, or high-impact polystyrene. The coating or layer applied to the film and/or cellulosic substrate may include a silicon-containing or fluorine-containing coating. For example, a silicone oil or polysiloxane may be applied as a coating. In other embodiments, hydrocarbon waxes may be applied as a coating. As the skilled person will appreciate, the coating, which may be referred to as a release coating, can be applied to both planar surfaces of the film and/or cellulosic substrate. In other embodiments, the release coating need only be applied to the planar surface of the film and/or cellulosic substrate that is ultimately removably mated with the asphaltic component.

In one or more embodiments, release member 21 and optional release member 27 are characterized by a thickness of from about 15 to about 80, in other embodiments from about 18 to about 75, and in other embodiments from about 20 to about 50 µm.

### PREPARATION OF MEMBRANE COMPOSITE

The membrane composite panels employed in the practice of this invention, whether with or without the primer layer, may be prepared in a factory setting, which can thereby maximize efficiency of manufacture and installation, as well as reduces VOCs during installation. While one or more manufacturing facilities may be employed in the manufacture of the composite, the membrane composite is fabricated before delivery to the location where the membrane composite is installed.

In one or more embodiments where the primer layer is applied in the fabrication facility, the manufacture of the membrane composite takes place by providing a polymer membrane panel, applying a pressure-sensitive adhesive to a surface of the panel, applying a primer composition to a surface of the panel opposite the surface where the adhesive is applied, applying a release liner over the pressure-sensitive adhesive, optionally applying a release liner over the primer layer, winding the membrane composite, and transporting the membrane composite to a location where the membrane composite will be installed.

In one or more embodiments where the primer layer is applied in the field, the manufacture of the membrane composite takes place by providing a polymer membrane panel, applying a pressure-sensitive adhesive to a surface of the panel, curing the pressure-sensitive adhesive, applying a release liner over the cured pressure-sensitive adhesive, winding the membrane composite, and transporting the membrane composite to a location where the membrane composite will be installed.

In one or more embodiments, the membrane panel may be provided by employing conventional techniques. For example, thermoplastic membrane panels may be formed by the extrusion of thermoplastic compositions into one or more layers that can be laminated into a membrane panel. Thermoset membranes can be formed using known calendering and curing techniques. Alternatively, thermoset membranes can be made by continuous process such as those disclosed in WO 2013/142562.

Once the membrane panel is provided, a curable hot-melt adhesive composition is applied to a planar surface of the panel. The application and curing of curable hot-melt adhesive compositions onto a roofing membrane are known as described in U.S. Publ. Nos. 2016/0230392; 2017/0114543; 2018/0257310; and 2017/0015083.

As is known in the art, the hot-melt adhesive composition can be extruded and applied to the membrane by extrusion techniques that employ known apparatus such as adhesive coaters. The adhesive composition can then subsequently be cured, or partially cured, by using, for example, UV radiation. The release film can then be applied to the adhesive layer and removably mated thereto by using, for example, squeeze rollers.

In one or more embodiments where the primer layer is applied in the fabrication facility, application of the primer can take place before, after, or simultaneous with the pressure-sensitive adhesive layer. As suggested above, in one or more embodiments, the primer is applied in the lap area or region of the membrane on a surface opposite the surface on which the pressure-sensitive adhesive is or will be applied. Methods for providing a membrane with a factory-applied primer are generally known in the art as described in U.S. Publ. Nos. 2007/0264471; 2010/0024955; 2011/0198023, 2010/0200148; and 2013/0295295.

In one or more embodiments where the primer layer is applied in the fabrication facility, the primer composition is applied using conventional techniques such as by roll, slot die, spray, metering rod, or extrusion coating techniques. In particular embodiments, the primer composition is applied by spraying. For example, the composition can be sprayed by employing air, electric, hydraulic, and airless spray equipment.

In one or more embodiments where the primer layer is applied in the fabrication facility, the primer composition is applied at a rate of greater than 100, in other embodiments greater than 125, and in other embodiments greater than 150 square feet per gallon. In these or other embodiments, the primer composition is applied at a rate of less than 250, in other embodiments less than 225, and in other embodiments less than 200 square feet per gallon. In one or more embodiments, the primer composition is applied at a rate of from about 100 to about 250, in other embodiments from about 125 to about 225, and in other embodiments from about 150 to about 200 square feet per gallon.

In one or more embodiments where the primer layer is applied in the fabrication facility, after application to the membrane panel, sufficient time is provided to effect the cure of the primer composition. In one or more embodiments, the composition may be subjected to heat or moisture to cause a crosslinking of one or more of the crosslinkable polymers within the primer coating. Following application of the primer composition and, if required, a curing step, a release film can optionally be removably mated to the primer layer.

Advantageously, where the membrane panel is made by using continuous techniques, the process can be supplemented with continuous techniques for applying and curing the adhesive coatings and, if present, the primer compositions, according to embodiments of the present invention to thereby prepare usable membrane composites within a single continuous process.

Once the adhesive layer and, if present, the primer layer, is applied to the membrane panel, as well as one or more of the respective release members, the membrane panel is cut to length and rolled on itself for subsequent storage and shipment to the installation site. In embodiments where the primer layer is applied in the factory, and where the primer layer disclosed herein is tack free, which allows for rolling, storage, and shipment without a release liner being mated to the primer layer, the step of rolling the membrane causes the primer layer to contact to the bottom surface of the release liner that is mated to the pressure-sensitive layer.

To the extent that the membrane is rolled for storage and shipment, the step of providing the membrane composite may include providing a rolled membrane composite to the location where the membrane composite will be installed. As the skilled person will appreciate, in order to place the membrane composite into position for installation, the membrane composite is unrolled.

### INSTALLATION OF ROOF SYSTEM

According to aspects of the invention, adjacent roofing panels of a roof system can be installed on a roof surface (also known as roof substrate) by using standard peel-and-stick techniques, including adhesive seaming with a pre-applied pressure-sensitive adhesive (which serves as the splice adhesive). In embodiments where the primer layer is applied in the fabrication facility, this occurs without the need to field prime the lateral edge of the roofing membrane. In other embodiments, prior to seaming the adjacent membranes, a primer composition is field applied to at least a portion of the upper surface of the membrane panel (e.g. the lateral edge of the membrane panel) to which the pre-applied pressure-sensitive adhesive is mated. Those skilled in the art appreciate that peel-and-stick refers to techniques whereby a protective membrane, such as a release member, which is removably mated to a surface, is removed to expose the surface, and the exposed surface is then mated to a second surface.

For example, according to aspects of the invention, a membrane can be unrolled on a roof surface and placed into position. Portions of the membrane are then typically folded back and portions of the release member that are removably mated to the pressure-sensitive adhesive layer are removed. The membrane can then subsequently be mated to the roof surface through the adhesive layer by using various techniques including the use of rollers and the like to mate the adhesive to the substrate. After securing this first membrane to the roof substrate, a second membrane is positioned adjacent to this first membrane with a portion of the second membrane overlapping the first membrane to form a lap. The second membrane also carries an adhesive layer on its bottom surface (i.e. roof contacting surface), and this adhesive, through standard peel-and-stick techniques, is used to secure the second membrane to the roof substrate. Additionally, the adhesive layer of the second membrane is used to mate the second membrane to the first membrane in the lap area. Again, this may include peel-and-stick techniques whereby a release member is removed from the adhesive on the second membrane in the lap region. In embodiments where the primer is applied in the fabrication facility, optionally, a release member is removed from the lap area on the top of the first membrane to expose the primer layer.

In embodiments where the primer is not applied in the fabrication facility, prior to mating the adhesive disposed on the second membrane to the first membrane in the lap area, the lap area of the first membrane is field primed with a primer composition that includes a silicon-terminated polymer, which composition is described above. Application of the field primer can take place by using conventional techniques such as brushing, spraying, and rolling. In particular embodiments, the application of the primer composition to the lap region employs an abrasive instrument, such as an abrasive pad, which allows for application of the primer composition by using a scrubbing technique. Methods and techniques for field application of a primer composition to the lap edge of a membrane are generally known in the art as described in U.S. Pat. Nos. 5,520,761 and 5,976,292. In other particular embodiments, the primer composition is applied by spraying. For example, the composition can be sprayed by employing air, electric, hydraulic, and airless spray equipment. In one or more embodiments, the primer compositions of this invention can be field sprayed by using conventional spray equipment such as, but not limited, spray equipment sold by Graco, Inc.

In one or more embodiments where the primer is applied in the field, the primer composition is applied at a coverage rate of greater than 100, in other embodiments greater than 125, and in other embodiments greater than 150 square feet per gallon. In these or other embodiments, the primer composition is applied at a coverage rate of less than 1,000 in other embodiments less than 750, in other embodiments less than 500, in other embodiments less than 250, in other embodiments less than 225, and in other embodiments less than 200 square feet per gallon. In one or more embodiments, the primer composition is applied at a rate of from about 100 to about 1,000, in other embodiments from about 125 to about 225, and in other embodiments from about 150 to about 200 square feet per gallon.

As indicated above, in one or more embodiments where the primer is applied in the field, the primer composition may be applied to the lap area, which may also be referred to as lap region or lap edge, of a membrane to which a second membrane is adhesively mated in the formation of a lap seam. As the skilled person will appreciate, the lap area generally occupies less than 20%, in other embodiments less than 10%, and in other embodiments less than 5% of the surface area of the upper surface of the panel. In these or other embodiments, the lap area extends along the lateral edge of the membrane panel (i.e., extends along a longitudinal length of the panel) and extends inwardly from the edge (i.e., perpendicular to the edge) greater than 1 cm, in other embodiments greater than 2 cm, and in other embodiments greater than 3 cm. In these or other embodiments, the lap area extends along the lateral edge of the panel and extends inwardly from the edge less than 60 cm, in other embodiments less than 40 cm, in other embodiments less than 30 cm, and in other embodiments less than 20 cm. In one or more embodiments, the lap area extends along the lateral edge of panel and extends inwardly from the edge a distance of from about 1 to about 60, in other embodiments from about 2 to about 40, and in other embodiments from about 3 to about 20 cm.

In one or more embodiments where the primer is applied in the field, the primer composition is applied at a thickness sufficient to provide a cured primer layer having a thickness of greater than 6 µm (0.25 mil), in other embodiments greater than 12 µm (0.5 mil), in other embodiments greater than 25 µm (1 mil), in other embodiments greater than 38 µm (1.5 mil), in other embodiments greater than 51 µm (2 mil), and in other embodiments greater than 64 µm (2.5 mil). In these or other embodiments, the primer composition is applied at a thickness sufficient to provide a cured primer layer having a thickness of less than 178 µm (7 mil), in other embodiments less than 127 µm (5 mil), and in other embodiments less than 76 µm (3 mil). In one or more embodiments, the primer composition is applied at a thickness sufficient to provide a cured primer layer having a thickness of from about 6 to about 178 µm (about 0.25 to about 7 mil), in other embodiments from about 25 to about 127 µm (about 1 to about 5 mil), and in other embodiments from about 51 to about 76 µm (about 2 to about 3 mil).

In embodiments where the primer is applied in the field, once the primer composition is applied, a period of time is provided to allow the composition to cure prior to mating the adjacent membrane in the formation of a lap seam. In one or more embodiments, the time period provided to allow the primer composition to cure prior to mating the seam is greater than 0.5 min, in other embodiments greater than 1 min, and in other embodiments greater 3 min. In these or other embodiments, the time period provided to allow the primer composition to cure prior to mating the seam is less than 60 min, in other embodiments less than 30 min, and in other embodiments less than 15 min. In one or more embodiments, the time period provide to allow the primer composition to cure prior to mating the seam is from about 0.5 to about 60 min, in other embodiments from about 1 to about 30 min, and in other embodiments from about 3 to about 15 min.

Whether the primer layer is applied in the fabrication facility or in the field, the lap area is seamed by mating the adhesive layer on the second membrane to the primer layer on the first membrane. The skilled person appreciates that these methods can be performed in multiple sequences. For example, the seam can be formed between the first and second membranes prior to securing the membranes to the roof substrate. Or, the first membrane secured to the roof substrate can be positioned in an overlapping fashion to an adjacent membrane that is subsequently set in place. In other words, those performing the installation can, as a matter of preference, elect which of the adjacent membranes form the overlapping portion of the lap.

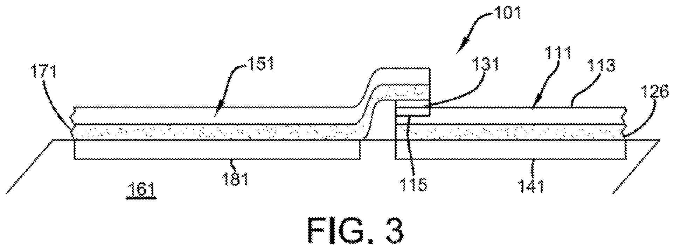

Methods for installing a roof system and the resulting roof system can be described with reference to Fig. 3, which shows roof system 101 including first membrane composite 111 and second membrane composite 151, which are both adhesively secured to roof substrate 161. Specifically, membrane composite 111 is adhesively secured to substrate 161 through pressure-sensitive adhesive layer 121 along a roof-surface contacting region 141. And, membrane composite 151 is secured to roof substrate 161 through pressure-sensitive adhesive layer 171 along a roof-substrate contacting region 181. Additionally, adhesive layer 171 of composite membrane 151 is adhesively mated to the primer layer 131 along the lap seam area 115.

In one or more embodiments, roof system 101 is installed by first providing membrane composite 111, which includes membrane 113, adhesive layer 121, and primer layer 131. Adhesive layer 121 is disposed on a bottom or roof-contacting surface of membrane 113. Primer layer 131 is disposed on an opposite surface of membrane 113 in at least lap area 115. Prior to installation, membrane composite 111 may include a release member removably attached to adhesive layer 121 opposite membrane 113. Also, a release member may optionally be removably attached to primer layer 131 on a surface thereof opposite membrane 113. During installation, the release member is removed from the pressure sensitive adhesive layer 121 and membrane composite 111 is adhesively secured to the roof substrate 161.

A second membrane composite 151 is provided. The second membrane composite 151 includes a pressure sensitive adhesive layer 171 on a second planar surface of the membrane and a release member removably affixed to the pressure sensitive adhesive layer 171. The second membrane composite 151 also optionally includes a pre-applied primer layer on a lap seam area of its first planar surface wherein the pre-applied primer layer also optionally includes a release liner removably affixed to the pre-applied primer layer. Second membrane composite 151 is positioned adjacent to first membrane composite 111 so as to overlap the lap area 115. A release member is removed from pressure sensitive adhesive layer 171, and membrane composite 151 is adhesively secured to roof substrate.

Then, second membrane composite 151 is seamed to first membrane composite 111 by mating adhesive layer 171 of composite 151 to primer layer 131 of first composite 111. As suggested above, this step may require removing a release member from adhesive layer 171 within the overlapping seam area, and may also require removing a release member from primer layer 131 of composite 111 in embodiments where the primer layer is applied in the fabrication facility. In embodiments where the primer is applied in the field, prior to performing this mating step, the primer composition of this invention is applied to surface 113 of membrane 111 in the lap area 115. The primer composition is provided sufficient time to cure and thereby form cured primer layer 131. The mating of composite 151 to composite 111 within the lap area may be facilitated by the use of rollers and the like to apply force to composite 151 in the lap area.

Following this seaming step, a lap sealant may optionally be applied in the location where membrane composite 151 terminates in an overlapping manner on composite 111 (i.e. at the lap edge).

### ROOF SUBSTRATE

Practice of the present invention is not necessarily limited by the selection of any particular roof substrate to which the membranes can be attached in forming the roof systems of the present invention. In one or more embodiments, the roof substrate may include the roof deck. In other embodiments, the roof substrate may include an intervening construction layer disposed above the roof deck. As the skilled person will appreciate, these intervening layers may include, but are not limited to, insulation boards, cover boards, underlayment, and existing membranes.

Various modifications and alterations that do not depart from the scope of the appended claims will become apparent to those skilled in the art. This invention is not to be duly limited to the illustrative embodiments set forth herein.

## Claims

1. A method of installing a roof system, the method comprising:
(i) providing a first membrane composite including
a) a polymeric planar body having
1) a first planar surface and
2) a second planar surface,
b) a UV-cured pressure-sensitive adhesive layer disposed on the second planar surface,
c) a release member removably secured to the UV-cured pressure-sensitive adhesive layer opposite the polymeric planar body, and
d) a primer layer disposed along a lap area on the first planar surface, where the primer layer includes a cured residue of a silyl-terminated polymer;
(ii) adhesively securing the first membrane composite to a roof surface through the UV-cured pressure-sensitive adhesive layer;
(iii) providing a second membrane composite including
a) a polymeric planar body having
1) a first planar surface and
2) a second planar surface,
b) a UV-cured pressure-sensitive adhesive layer disposed on the second planar surface,
c) a release member removably secured to the UV-cured pressure-sensitive adhesive layer opposite the planar body, and
d) optionally a primer layer disposed along a lap area on the first planar surface;
(iv) adhesively securing the second membrane composite to the roof surface through the UV-cured pressure-sensitive adhesive layer, where the second membrane composite is positioned adjacent to and partially overlapping the lap area of the first membrane composite; and
(v) adhesively securing the second membrane composite to the first planar surface of the first membrane composite along the primer layer through the UV-cured pressure-sensitive adhesive layer disposed on the second membrane composite.

2. The method of claim 1, where the primer layer of the first membrane composite is applied in a fabrication facility as a pre-applied primer layer; or where the primer layer of the first membrane composite is applied at the roof system location as an uncured primer composition, the method further comprising a step of allowing the uncured primer composition to cure.

3. The method of any of the above claims, where said step of providing a first membrane composite includes providing a first membrane composite in the form of a roll, and where the method includes unrolling the first membrane composite; and where said step of providing a second membrane composite includes providing a second membrane composite in the form of a roll, and where the method includes unrolling the second membrane composite.

4. The method of claim 2, where the uncured primer composition includes a silyl-terminated polymer.

5. The method of claim 4, where the silyl-terminated polymer includes a polyether backbone.

6. The method of claim 4, where the silyl-terminated polymer includes a polyurethane backbone.

7. The method of any of claims 4-6, where the uncured primer composition is **characterized by** a Brookfield Viscosity (#2 spindle at 20 r.p.m.) of less than 1500 centipoise.

8. The method of any of the above claims, wherein the lap area extends along a lateral edge of a respective one of the polymeric planar bodies; and where the polymeric planar bodies are a thermoplastic membrane or a cured rubber membrane.

9. The method of any of the above claims, where the pressure-sensitive adhesive layer includes a UV-cured acrylic resin.

10. The method of any of the above claims, where the primer layer has a thickness of less than 178 µm (7 mil).

11. A membrane composite comprising:
(i) a polymeric membrane panel having a first planar surface and a second planar surface;
(ii) a pressure-sensitive adhesive layer disposed on said second planar surface;
(iii) a release member removably secured to said pressure-sensitive adhesive layer; and
(iv) a primer layer applied along a lap area on said second planar surface, where the primer layer includes a cured residue of a silyl-terminated polymer.

12. A method of installing a roof system, the method comprising:
(i) providing a first membrane composite including a polymeric planar body having a first planar surface and a second planar surface, a UV-cured pressure-sensitive adhesive layer disposed on the second planar surface, and a release member removably secured to the pressure-sensitive adhesive layer opposite the polymeric planar body;
(ii) removing the release member;
(iii) adhesively securing the first membrane composite to a roof surface through the UV-cured pressure-sensitive adhesive layer;
(iv) providing a second membrane composite including a polymeric planar body having a first planar surface and a second planar surface, a UV-cured pressure-sensitive adhesive layer disposed on the second planar surface, and a release member removably secured to the pressure-sensitive adhesive layer opposite the planar body;
(v) partially removing the release member from the second membrane composite;
(vi) adhesively securing the second membrane composite to the roof surface through the UV-cured pressure-sensitive adhesive layer where the release member has been partially removed, where the second membrane composite is positioned adjacent to and partially overlapping a lap area on the first planar surface of the first membrane composite;
(vii) applying a primer composition to the lap area on the first planar surface of the first membrane, where the primer composition includes a silyl terminated polymer;
(viii) allowing the primer composition to at least partially cure and thereby form an at least partially cured primer layer;
(ix) fully removing the release member from the second membrane composite; and
(x) adhesively securing the second membrane composite to the first planar surface of the first membrane composite by mating the pressure-sensitive adhesive of the second membrane to the least partially cured primer layer disposed on the first membrane composite.

13. The method of claim 12, where the step of applying the primer composition takes place at a coverage rate of from greater than 100 to less than 1000 square feet per gallon.

14. The method of any of claims 12 or 13 , where the primer composition includes a silyl-terminated polymer, an adhesion promoter, a moisture scavenger, a plasticizer, and a catalyst.

## Patentansprüche

1. Verfahren zum Installieren eines Dachsystems, wobei das Verfahren umfasst:
(i) Bereitstellung eines ersten Membranverbunds, der umfasst:
a) einen polymeren flächigen Körper mit
1) einer ersten ebenen Fläche und
2) einer zweiten ebenen Fläche,
b) eine UV-gehärtete Haftklebstoffschicht, die auf der zweiten ebenen Oberfläche aufgebracht ist,
c) ein Ablöseelement, das abnehmbar an der UV-gehärteten Haftklebstoffschicht gegenüber dem polymeren flächigen Körper aufgebracht ist, und
d) eine Grundierungsschicht, die entlang eines Überlappungsbereichs auf der ersten ebenen Oberfläche angeordnet ist, wobei die Grundierungsschicht einen gehärteten Rest eines Polymers mit Silyl-Endgruppen enthält;
(ii) klebende Befestigung des ersten Membranverbunds auf einer Dachoberfläche durch die UV-gehärtete Haftklebstoffschicht;
(iii) Bereitstellung eines zweiten Membranverbunds, der umfasst:
a) einen polymeren flächigen Körper mit
1) einer ersten ebenen Fläche und
2) einer zweiten ebenen Fläche,
b) eine UV-gehärtete Haftklebstoffschicht, die auf der zweiten ebenen Oberfläche aufgebracht ist,
c) ein Ablöseelement, das abnehmbar an der UV-gehärteten Haftklebstoffschicht gegenüber dem flächigen Körper aufgebracht ist, und
d) optional eine Grundierungsschicht, die entlang eines Überlappungsbereichs auf der ersten ebenen Oberfläche angeordnet ist;
(iv) klebende Befestigung des zweiten Membranverbunds an der Dachoberfläche durch die UV-gehärtete Haftklebstoffschicht, wobei der zweite Membranverbund angrenzend an den Überlappungsbereich des ersten Membranverbunds positioniert ist und diesen teilweise überlappt; und
(v) klebende Befestigung des zweiten Membranverbunds an der ersten ebenen Oberfläche des ersten Membranverbunds entlang der Grundierungsschicht durch die UV-gehärtete Haftklebstoffschicht, die auf dem zweiten Membranverbund angeordnet ist.

2. Verfahren nach Anspruch 1, bei dem die Grundierungsschicht des ersten Membranverbunds in einer Herstellungsanlage als voraufgetragene Grundierungsschicht aufgebracht ist; oder bei dem die Grundierungsschicht des ersten Membranverbunds am Ort des Dachsystems als unausgehärtete Grundierungszusammensetzung aufgebracht wird, wobei das Verfahren ferner einen Schritt des Aushärtens der unausgehärteten Grundierungszusammensetzung umfasst.

3. Verfahren nach einem der vorstehenden Ansprüche, wobei der Schritt des Bereitstellens eines ersten Membranverbunds das Bereitstellen eines ersten Membranverbunds in Form einer Rolle umfasst und wobei das Verfahren das Abrollen des ersten Membranverbunds umfasst; und wobei der Schritt des Bereitstellens eines zweiten Membranverbunds das Bereitstellen eines zweiten Membranverbunds in Form einer Rolle umfasst und wobei das Verfahren das Abrollen des zweiten Membranverbunds umfasst.

4. Verfahren nach Anspruch 2, wobei die ungehärtete Grundierungszusammensetzung ein Polymer mit Silyl-Endgruppen enthält.

5. Verfahren nach Anspruch 4, wobei das Polymer mit Silyl-Endgruppen ein Polyether-Grundgerüst aufweist.

6. Verfahren nach Anspruch 4, wobei das Polymer mit Silyl-Endgruppen ein Polyurethan-Grundgerüst aufweist.

7. Verfahren nach einem der Ansprüche 4 bis 6, wobei die ungehärtete Grundierungszusammensetzung durch eine Brookfield-Viskosität (Spindel Nr. 2 bei 20 U/min) von weniger als 1500 Centipoise gekennzeichnet ist.

8. Verfahren nach einem der vorstehenden Ansprüche, wobei sich der Überlappungsbereich entlang einer Seitenkante eines jeweiligen der polymeren flächigen Körper erstreckt und wobei die polymeren flächigen Körper eine thermoplastische Membran oder eine gehärtete Gummimembran sind.

9. Verfahren nach einem der vorstehenden Ansprüche, wobei die Haftklebstoffschicht ein UV-gehärtetes Acrylharz enthält.

10. Verfahren nach einem der vorstehenden Ansprüche, wobei die Grundierungsschicht eine Dicke von weniger als 178 µm (7 mil) aufweist.

11. Membranverbund, der umfasst:
(i) eine polymere Membranplatte mit einer ersten ebenen Oberfläche und einer zweiten ebenen Oberfläche;
(ii) eine Haftklebstoffschicht, die auf der zweiten ebenen Oberfläche aufgebracht ist;
(iii) ein Ablöseelement, das abnehmbar an der Haftklebstoffschicht aufgebracht ist; und
(iv) eine Grundierungsschicht, die entlang eines Überlappungsbereichs auf der zweiten ebenen Oberfläche aufgebracht wird, wobei die Grundierungsschicht einen gehärteten Rest eines Polymers mit Silyl-Endgruppen enthält.

12. Verfahren zum Installieren eines Dachsystems, wobei das Verfahren umfasst:
(i) Bereitstellen eines ersten Membranverbunds, der einen polymeren flächigen Körper mit einer ersten ebenen Oberfläche und einer zweiten ebenen Oberfläche, eine UV-gehärtete Haftklebstoffschicht, die auf der zweiten ebenen Oberfläche angeordnet ist, und ein Ablöseelement, das abnehmbar an der Haftklebstoffschicht gegenüber dem polymeren flächigen Körper aufgebracht ist, umfasst;
(ii) Entfernen des Ablöseelements;
(iii) klebende Befestigung des ersten Membranverbunds auf einer Dachoberfläche durch die UV-gehärtete Haftklebstoffschicht;
(iv) Bereitstellen eines zweiten Membranverbunds, der einen polymeren flächigen Körper mit einer ersten ebenen Oberfläche und einer zweiten ebenen Oberfläche, eine UV-gehärtete, Haftklebstoffschicht, die auf der zweiten ebenen Oberfläche angeordnet ist, und ein Ablöseelement, das abnehmbar an der Haftklebstoffschicht gegenüber dem flächigen Körper aufgebracht ist, umfasst;
(v) teilweises Entfernen des Ablöseelements von dem zweiten Membranverbund;
(vi) klebendes Befestigen des zweiten Membranverbunds an der Dachoberfläche durch die UV-gehärtete Haftklebstoffschicht, wo das Ablöseelement teilweise entfernt wurde, wobei der zweite Membranverbund angrenzend an einen Überlappungsbereich auf der ersten ebenen Oberfläche des ersten Membranverbunds positioniert ist und diesen teilweise überlappt;
(vii) Aufbringen einer Grundierungszusammensetzung auf den Überlappungsbereich auf der ersten ebenen Oberfläche der ersten Membran, wobei die Grundierungszusammensetzung ein Polymer mit Silyl-Endgruppen enthält;
(viii) Ermöglichen, dass die Grundierungszusammensetzung zumindest teilweise aushärtet und dadurch eine zumindest teilweise ausgehärtete Grundierungsschicht bildet;
(ix) vollständiges Entfernen des Ablöseelements von dem zweiten Membranverbund; und
(x) klebendes Befestigen des zweiten Membranverbunds an der ersten ebenen Oberfläche des ersten Membranverbunds durch Zusammenfügen des Haftklebers der zweiten Membran mit der zumindest teilweise ausgehärteten Grundierungsschicht, die auf dem ersten Membranverbund angeordnet ist.

13. Verfahren nach Anspruch 12, wobei der Schritt des Auftragens der Grundierungszusammensetzung mit einer Deckungsrate von mehr als 100 bis weniger als 1000 Quadratfuß pro Gallone erfolgt.

14. Verfahren nach einem der Ansprüche 12 oder 13, wobei die Grundierungszusammensetzung ein Polymer mit Silyl-Endgruppen, einen Haftvermittler, einen Feuchtigkeitsfänger, einen Weichmacher und einen Katalysator enthält.

## Revendications

1. Méthode d'installation d'un système de toiture, la méthode comprenant :
(i) fournir une première membrane composite comprenant
a) un corps polymère planaire ayant
1) une première surface plane et
2) une deuxième surface plane,
b) une couche adhésive autocollante durcie aux UV, disposée sur la seconde surface plane,
c) un élément de libération fixé de manière amovible à la couche adhésive autocollante durcie aux UV, à l'opposé du corps polymère planaire, et
d) une couche d'apprêt disposée le long d'une zone de recouvrement sur la première surface plane, la couche d'apprêt comprenant un résidu durci d'un polymère à terminaison silyle ;
(ii) fixation par adhésif de la première membrane composite à la surface du toit à travers la couche adhésive autocollante durcie aux UV ;
(iii) fournir une seconde membrane composite comprenant
a) un corps polymère planaire ayant
1) une première surface plane et
2) une deuxième surface plane,
b) une couche adhésive autocollante durcie aux UV, disposée sur la seconde surface plane,
c) un élément de libération fixé de manière amovible à la couche adhésive autocollante durcie aux UV, à l'opposé du corps planaire, et
d) éventuellement, une couche d'apprêt disposée le long d'une zone de recouvrement sur la première surface plane ;
(iv) fixer par adhésif la seconde membrane composite à la surface du toit par l'intermédiaire de la couche adhésive autocollante durcie aux UV, la seconde membrane composite étant adjacente à la zone de recouvrement de la première membrane composite et la recouvrant partiellement ; et
(v) fixer par adhésif la seconde membrane composite à la première surface plane de la première membrane composite le long de la couche d'apprêt à travers la couche adhésive autocollante durcie aux UV disposée sur la seconde membrane composite.

2. Méthode de la revendication 1, dans laquelle la couche d'apprêt de la première membrane composite est appliquée dans une installation de fabrication en tant que couche d'apprêt pré-appliquée, ou dans laquelle la couche d'apprêt de la première membrane composite est appliquée à l'emplacement du système de toiture en tant que composition d'apprêt non durcie, la méthode comprenant en outre une étape consistant à permettre à la composition d'apprêt non durcie de durcir.

3. Méthode de l'une des revendications précédentes, dans laquelle l'étape consistant à fournir une première membrane composite consiste à fournir une première membrane composite sous forme de rouleau, et dans laquelle la méthode consiste à dérouler la première membrane composite ; et dans laquelle l'étape consistant à fournir une deuxième membrane composite consiste à fournir une deuxième membrane composite sous forme de rouleau, et dans laquelle la méthode consiste à dérouler la deuxième membrane composite.

4. Méthode de la revendication 2, dans laquelle la composition d'apprêt non durcie comprend un polymère à terminaison silyle.

5. Méthode de la revendication 4, dans laquelle le polymère à terminaison silyle comprend un squelette de polyéther.

6. Méthode de la revendication 4, dans laquelle le polymère à terminaison silyle comprend un squelette de polyuréthane.

7. Méthode de l'une des revendications 4 à 6, dans laquelle la composition d'apprêt non durcie est **caractérisée par** une viscosité Brookfield (broche n° 2 à 20 tours par minute) inférieure à 1500 centipoises.

8. Méthode de l'une des revendications précédentes, dans laquelle la zone de recouvrement s'étend le long d'un bord latéral de l'un des corps planaires polymères, et dans laquelle les corps planaires polymères sont une membrane thermoplastique ou une membrane en caoutchouc vulcanisé.

9. Méthode de l'une des revendications précédentes, dans laquelle la couche adhésive autocollante comprend une résine acrylique durcie aux UV.

10. Méthode de l'une des revendications précédentes, dans laquelle la couche primaire a une épaisseur inférieure à 178 µm (7 mil).

11. Membrane composite comprenant
(i) un panneau de membrane polymère ayant une première surface plane et une seconde surface plane ;
(ii) une couche adhésive autocollante disposée sur ladite seconde surface plane ;
(iii) un élément de libération fixé de manière amovible à ladite couche adhésive autocollante ; et
(iv) une couche d'apprêt appliquée le long d'une zone de recouvrement sur ladite seconde surface plane, la couche d'apprêt comprenant un résidu durci d'un polymère à terminaison silyle.

12. Méthode d'installation d'un système de toiture, la méthode comprenant :
(i) fournir une première membrane composite comprenant un corps polymère planaire ayant une première surface plane et une seconde surface plane, une couche adhésive autocollante durcie aux UV disposée sur la seconde surface plane, et un élément de libération fixé de manière amovible à la couche adhésive autocollante à l'opposé du corps polymère planaire ;
(ii) retirer l'élément de libération ;
(iii) fixer par adhésif la première membrane composite à la surface d'un toit par l'intermédiaire de la couche adhésive autocollante durcie aux UV ;
(iv) fournir une seconde membrane composite comprenant un corps polymère planaire ayant une première surface plane et une seconde surface plane, une couche adhésive autocollante durcie aux UV disposée sur la seconde surface plane, et un élément de libération fixé de manière amovible à la couche adhésive autocollante à l'opposé du corps planaire ;
(v) retirer partiellement l'élément de libération de la seconde membrane composite ;
(vi) fixer par adhésif la seconde membrane composite à la surface du toit à travers la couche adhésive autocollante durcie aux UV lorsque l'élément de libération a été partiellement retiré, la seconde membrane composite étant placée à côté d'une zone de recouvrement sur la première surface plane de la première membrane composite et la chevauchant partiellement ;
(vii) application d'une composition d'apprêt sur la zone de recouvrement de la première surface plane de la première membrane, la composition d'apprêt comprenant un polymère à terminaison silyle ;
(viii) permettre à la composition d'apprêt de durcir au moins partiellement et former ainsi une couche d'apprêt au moins partiellement durcie ;
(ix) retirer complètement l'élément de libération de la seconde membrane composite ; et
(x) fixer par adhésif la seconde membrane composite à la première surface plane de la première membrane composite en accouplant l'adhésif autocollent de la seconde membrane à la couche d'apprêt au moins partiellement durcie disposée sur la première membrane composite.

13. Méthode de la revendication 12, dans laquelle l'étape d'application de la composition d'apprêt se fait à un taux de couverture de plus de 100 à moins de 1000 pieds carrés par gallon.

14. Méthode de l'une des revendications 12 ou 13, dans laquelle la composition d'apprêt comprend un polymère à terminaison silyle, un promoteur d'adhérence, un capteur d'humidité, un plastifiant et un catalyseur.
